# EUROPÄISCHE PATENTSCHRIFT

(11) **EP 4 249 790 B1**
(45) Veröffentlichungstag und Bekanntmachung des Hinweises auf die Patenterteilung: **02.09.2026**
(21) Anmeldenummer: 23162963.5
(22) Anmeldetag: 20.03.2023
(51) Int. Cl.: F16M 7/00, B21D 22/28, B21D 28/00

(54) **STELLVORRICHTUNG**
ACTUATING DEVICE
DISPOSITIF DE RÉGLAGE

(30) Priorität: 21.03.2022 DE 102022202722
(43) Veröffentlichungstag der Anmeldung: 27.09.2023
(73) Patentinhaber: Universität Stuttgart, 70174 Stuttgart (DE)
(72) Erfinder: Weiß, André, 70174 Stuttgart (DE); Liewald, Mathias, 70174 Stuttgart (DE); Clauß, Philipp, 70174 Stuttgart (DE)
(74) Vertreter: Altmann Stößel Dick Patentanwälte PartG mbB

(56) Entgegenhaltungen:
- DE-U1- 20 312 774
- US-A- 5 427 349

## Beschreibung

### Technisches Gebiet

Die vorliegende Erfindung betrifft eine Stellvorrichtung.

### Technischer Hintergrund

In vielen technischen Bereichen kommen Stellvorrichtungen zum Einsatz. Derartige Stellvorrichtungen sind auch als Einstellvorrichtung oder Nivellierschuh bekannt. Ein mögliches Einsatzgebiet, auf das die vorliegende Erfindung jedoch nicht beschränkt ist, ist die Umformtechnik. Beim Umformen werden Werkstücke oder Bauteile mittels eines Umformwerkzeugs hergestellt. Umformwerkzeuge sind Maschinen zum Umformen eines Werkstoffs oder Halbzeugs. Umformwerkzeuge bestehen in aller Regel zumindest aus einer Matrize, in der der umzuformende Werkstoff oder das Halbzeug angeordnet wird, und einem Stempel, der auf den Werkstoff oder das Halbzeug in der Matrize einwirkt. Für die Feineinstellung des Verfahrwegs des Stempels in das Werkstück wird eine Stellvorrichtung verwendet. Die aktuell am weitesten verbreitetsten Arten von Stellvorrichtungen sind Keilverstellungen. Keilverstellungen bestehen aus einer schiefen Ebene, auf der ein Keil nach oben und unten verschoben werden kann. Der Keil wird dabei von einem Verschiebeelement verschoben. Durch das Verschieben des Keils wird die Höhe der Keilverstellung verändert, da der Abstand zwischen einer Tragplatte zur Aufnahme des Stempels und einer gegenüberliegenden Bodenplatte verändert wird.

Die US 5 427 349 A offenbart eine einstellbare Basisbaugruppe.

Die DE 203 12 774 U1 offenbart einen Nivellierkeilschuh mit symmetrischer Lastverteilung.

Die EP 1 236 006 B1 offenbart einen Nivellierschuh mit einer eine Basisfläche aufweisenden Bodenplatte und mit einer Tragplatte für einen Gegenstand, die mittels einer Stellkeilvorrichtung in einer zur Basisflache rechtwinkligen Höhenrichtung verstellbar ist. Die Stellkeilvorrichtung umfasst zwei durch Betätigung einer Schraubenspindel gegenseitig zueinander oder voneinander bewegbare Keile, die Auflageflächen für die Tragplatte aufweisen. Die Auflageflächen sind in jeder Stellung der Keile symmetrisch zu einer zur Basisfläche senkrechten, ersten Ebene angeordnet, in welcher die Achse einer den Gegenstand mit der Bodenplatte oder mit dem Fundament verbindenden, durch die Tragplatte hindurchragenden Befestigungsschraube verläuft. Die Schraubenspindelachse ist rechtwinklig zur ersten Ebene angeordnet. Die Schraubenspindel ist mit zwei die gleiche Gewindesteigung, jedoch entgegengesetzte Steigungsrichtung aufweisenden Gewindeteilen versehen.

Trotz der zahlreichen Vorteile der aus dem Stand der Technik bekannten Stellvorrichtungen beinhalten diese noch Verbesserungspotenzial. Der Bauraum bekannter Keilverstellungen ist aufgrund der benötigten Fixierung des Keils vergrößert. Hierdurch können die Systeme nur an gewissen Stellen im Werkzeug/Umformmaschine eingebaut werden. Aufgrund der sehr hohen Prozesskräfte bei der Kaltmassivumformung kann die verschobene Position des Keils auf der schiefen Ebene nicht vom Verschiebeelement, das zumeist eine Spindel ist, oder der Selbsthemmung des Keils gehalten werden. Daher muss die Keilverstellung vor dem Einsatz vorgespannt oder verriegelt werden. Die Keilverstellung wird sowohl beim Werkezugeinbau als auch im Umformprozess, zumeist manuell von Hand, verstellt. Da zum Verstellen die Umformmaschine angehalten werden muss, wird die Keilverstellung zumeist manuell und erfahrungsbasiert von einem Maschinenbediener verstellt. Dadurch wird viel Zeit zur Einstellung der Keilverstellung benötigt.

### Aufgabe der Erfindung

Es wäre daher wünschenswert, eine Stellvorrichtung und ein Umformwerkzeug bereitzustellen, welche die Nachteile bekannter Stellvorrichtungen und Umformwerkzeuge zumindest weitgehend vermeiden. Insbesondere soll die Stellvorrichtung platzsparender und schneller einstellbar als herkömmliche Stellvorrichtungen sein. So soll die Stellvorrichtung keine zusätzliche Fixierung des Keils benötigen, so dass die Keilverstellung ohne Stopp der Umformmaschine verstellt werden kann, um Störgrößen, wie beispielsweise thermische Dehnungen, hochflexibel im Prozess kompensieren zu können und somit die Bauteilgenauigkeit, die Proesssicherzeit und Prozessrobustheit bedeutend zu steigern.

### Allgemeine Beschreibung der Erfindung

Diese Aufgabe wird adressiert durch Stellvorrichtung und ein Umformwerkzeug mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird eine Stellvorrichtung vorgeschlagen. Die Stellvorrichtung umfasst eine Bodenplatte. Die Stellvorrichtung umfasst weiterhin eine Tragplatte. Die Tragplatte ist relativ zu der Bodenplatte bewegbar. Die Tragplatte weist auf einer der Bodenplatte zugewandten Oberseite eine erste schiefe Ebene und eine zweite schiefe Ebene auf. Die erste schiefe Ebene und die zweite schiefe Ebene sind zueinander spiegelsymmetrisch zu bzw. bezüglich einer Symmetrieebene angeordnet.

Die Stellvorrichtung umfasst weiterhin ein erstes Stellelement. Das erste Stellelement ist in einer ersten Richtung auf der ersten schiefen Ebene bewegbar angeordnet. Das erste Stellelement berührt die Bodenplatte.

Die Stellvorrichtung umfasst weiterhin ein zweites Stellelement. Das zweite Stellelement ist in einer zweiten Richtung auf der zweiten schiefen Ebene bewegbar angeordnet. Die zweite Richtung ist der ersten Richtung entgegengesetzt. Das zweite Stellelement berührt die Bodenplatte.

Die Stellvorrichtung umfasst weiterhin mindestens ein drittes Stellelement. Das dritte Stellelement ist zwischen der Bodenplatte und der Tragplatte in einer dritten Richtung parallel zu der Symmetrieebene der Tragplatte bewegbar. Das dritte Stellelement ist zwischen dem ersten Stellelement und dem zweiten Stellelement angeordnet und berührt diese. Mittels des dritten Stellelements sind das erste Stellelement und das zweite Stellelement gemeinsam in der ersten Richtung und der zweiten Richtung bewegbar. Die erste Richtung und die zweite Richtung sind dabei spiegelsymmetrisch zu bzw. bezüglich der Symmetrieebene.

Durch das Bewegen des ersten und zweiten Stellelements jeweils über einer schiefen Ebene wird die Höhe der Stellvorrichtung verändert, da dadurch der Abstand zwischen Tragplatte und Bodenplatte verändert wird. Die Bewegung des ersten und zweiten Stellelements wird dabei von dem dritten Stellelement bewirkt, das das erste Stellelement und das zweite Stellelement zueinander oder voneinander weg bewegt. Hierdurch kann beispielsweise der Verfahrweg des Stempels in das Werkstück eingestellt werden. Durch das gezielte Zusammenspiel mehrerer Stellelemente kann dabei die Belastung auf das dritte Stellelement bzw. ein optional zum Bewegen bzw. Halten des dritten Stellelements vorgesehenes Bauteil, wie beispielsweise Verschiebeelement, signifikant reduziert werden. Das Vorsehen der schiefen Ebenen an der Tragplatte bewirkt eine Selbsthemmung Durch das Zusammenspiel der schiefen Ebenen auch mit dem dritten Stellelement werden Ablöseeffekte durch dynamische Schwingungen verhindert. Hierdurch wird keine zusätzliche Fixierung der Stellelemente benötigt, wodurch die Verstellung bedeutend schneller eingestellt und platzsparend gefertigt werden kann. Die Stellvorrichtung kann beispielsweise ohne Stopp der Umformmaschine verstellt werden, um Störgrößen, wie beispielsweise thermische Dehnungen, hochflexibel im Prozess kompensieren zu können und somit die Bauteilgenauigkeit, die Proesssicherzeit und Prozessrobustheit bedeutend zu steigern. So wird die auf das dritte Stellelement bzw. optionale Verschiebeelement wirkende Kraft, durch die spezielle Konstruktion mit den mehreren keilförmigen Stellelementen mit zentralem Stellelement zwischen zwei außenliegenden Stellelementen erheblich reduziert. Hierdurch kann der Bauraum bedeutend reduziert werden, es ist keine Verriegelung erforderlich und eine schnelle Anpassung der Stellvorrichtung im Prozess kann erfolgen.

Bevorzugt ist die dritte Richtung innerhalb der Symmetrieebene orientiert. Dadurch ist das dritte Stellelement genau in der Mitte zwischen dem ersten Stellelement und dem zweiten Stellelement bzw. der ersten schiefen Ebene und der zweiten schiefen Ebene der Tragplatte bewegbar.

Die dritte Richtung ist parallel zu einer der Tragplatte abgewandten Oberseite der Bodenplatte. Dadurch wird eine lineare Bewegung des dritten Stellelements mit konstantem Abstand zur Bodenplatte vorgesehen. Dies verringert den Aufwand zum Bewegen des dritten Stellelements.

Die erste Richtung und die zweite Richtung können senkrecht zu der dritten Richtung sein. Dadurch wird eine Art seitliche Bewegung des ersten und zweiten Stellelements definiert, was die Selbsthemmung entlang der schiefen Ebenen erhöht und zugleich die Krafteinwirkung auf das erste und zweite Stellelement von der Tragplatte ausgehend um 90° umlenkt. Außerdem erleichtert dies die durch das dritte Stellelement bewirkte Bewegung, da diese senkrecht zu der Bewegungsrichtung des dritten Stellelements erfolgt.

Die erste schiefe Ebene und die zweite schiefe Ebene können so spiegelsymmetrisch zu einer Symmetrieebene zueinander angeordnet sein, dass eine Höhe der Tragplatte mit zunehmenden Abstand senkrecht zu der Symmetrieebene zunimmt. Dadurch wird die Höhe der Stellvorrichtung bei einer Bewegung des ersten und zweiten Stellelements nach außen vergrößert, da diese sich auf der schiefen Ebene nach oben bewegen und somit den Abstand zwischen Bodenplatte und Tragplatte vergrößern. Umgekehrt wird die Höhe der Stellvorrichtung bei einer Bewegung des ersten und zweiten Stellelements nach innen verkleinert, da diese sich auf der schiefen Ebene nach unten bewegen und somit den Abstand zwischen Bodenplatte und Tragplatte verkleinern.

Das erste Stellelement, das zweite Stellelement und/oder das dritte Stellelement können im Wesentlichen keilförmig ausgebildet sein. Dies verbessert die Selbsthemmungseigenschaften und erspart somit eine zusätzliche Fixiervorrichtung.

Das dritte Stellelement kann zwei gegenüberliegende Außenflächen aufweisen. Die Außenflächen des dritten Stellelements können zueinander spiegelsymmetrisch zu der Symmetrieebene und bezüglich der dritten Richtung geneigt angeordnet sein. Das erste Stellelement und das zweite Stellelement können jeweils eine Außenfläche aufweisen. Die Außenflächen des ersten Stellelements und des zweiten Stellelement können komplementär zu den Außenflächen des dritten Stellelements zu der dritten Richtung geneigt sein. Das dritte Stellelement, das erste Stellelement und das zweite Stellelement können an den Außenflächen einander berühren. Somit wird das erste und das zweite Stellelement jeweils entlang von zwei unterschiedlichen schiefen Ebenen bewegt, was die Krafteinwirkung auf das dritte Stellelement bzw. das optionale Verschiebeelement zum Bewegen des dritten Stellelements deutlich reduziert. Außerdem wird die Selbsthemmung der Stellelemente deutlich verbessert. Durch die unterschiedlichen Gleitebenen der schiefen Ebenen an der Tragplatte und den Stellelementen werden Ablöseeffekte durch dynamische Schwingungen verhindert.

Die Tragplatte kann durch eine Bewegung des ersten Stellelements und des zweiten Stellelements im Wesentlichen parallel zu der Symmetrieebene und senkrecht zu der dritten Richtung relativ zu der Bodenplatte bewegbar sein. Die Tragplatte und die Bodenplatte sind somit linear und nicht schief oder schräg relativ zueinander bewegbar, was eine exakte Bewegungssteuerung der Tragplatte ermöglicht.

Das erste Stellelement kann eine Unterseite aufweisen, die komplementär zu der ersten schiefen Ebene der Tragplatte geneigt ist. Das zweite Stellelement kann eine Unterseite aufweisen, die komplementär zu der zweiten schiefen Ebene der Tragplatte geneigt ist. Dadurch berühren das erste Stellelement und das zweite Stellelement jeweils die schiefen Ebenen der Tragplatte vollflächig, was die Selbsthemmung aufgrund des vergrößerten Flächenkontakts und Reibung vergrößert.

Die Bodenplatte kann eine ebene Unterseite aufweisen. Dadurch wird das erste und zweite Stellelement linear entlang der ebenen Unterseite der Bodenplatte geführt.

Alternativ kann die Bodenplatte eine Unterseite mit einer ersten schiefen Ebene und einer zweiten schiefen Ebene aufweisen. Die erste schiefe Ebene und die zweite schiefe Ebene der Bodenplatte können zueinander spiegelsymmetrisch zu der Symmetrieebene angeordnet sein.

In diesem Fall kann das erste Stellelement eine Oberseite aufweisen, die komplementär zu der ersten schiefen Ebene der Bodenplatte geneigt ist, und das zweite Stellelement kann eine Oberseite aufweisen, die komplementär zu der zweiten schiefen Ebene der Bodenplatte geneigt ist. Dadurch können die schiefen Ebenen der Tragplatte in einem flacheren Winkel ausgebildet werden, wodurch eine höhere Selbsthemmung bei identischer Delta-Höhe resultiert.

Das dritte Stellelement kann auf der Tragplatte bewegbar angeordnet sein. Dadurch kann die Stellvorrichtung steifer gefertigt und stärker belastet werden.

Die Stellvorrichtung kann weiterhin ein Dämpfungselement umfassen. Das Dämpfungselement kann auf einer Oberseite der Bodenplatte angeordnet sein. Die Bodenseite ist der Tragplatte abgewandt. Ein solches Dämpfungselement reduziert die starken Schläge und die damit einhegenden Belastungen der Stellvorrichtung.

Die Stellvorrichtung kann weiterhin ein Verschiebelement umfassen. Das Verschiebeelement kann mit dem dritten Stellelement verbunden sein. Das Verschiebeelement kann zum Bewegen des dritten Stellelements ausgebildet sein. Dadurch lässt sich das dritte Stellelement einfach und exakt bewegen.

Das Verschiebeelement kann stangenförmig ausgebildet sein. Dadurch kann das dritte Stellelement auch aus größerer Entfernung sich bewegt werden.

Das Verschiebeelement kann manuell, hydraulisch, pneumatisch und/oder motorisch bewegbar sein. Entsprechend kann das Verschiebeelement nach Bedarf bewegt werden und den jeweiligen baulichen Gegebenheiten angepasst sein.

Beispielsweise kann das Verschiebelement mittels eines Motors bewegbar sein. Der Motor kann dabei alleine die Bewegung des Verschiebelements bewirken oder kann als eine Art Servo-Motor ausgebildet sein, der zum Bewegen des Verschiebeelements unterstützend wirkt.

Das Verschiebeelement kann eine Spindel oder eine Stange aufweisen. Die Spindel oder die Zahnstange kann mit einem Motor in Eingriff bringbar sein. Dadurch lässt sich das Verschiebeelement in kompakter Weise motorisch bewegen.

Die Stellvorrichtung kann weiterhin ein Fixierelement umfassen. Das Fixierelement kann zum Fixieren des Verschiebelements in einer vorbestimmten Position ausgebildet sein. Dadurch wird eine unbeabsichtigte Veränderung der gewählten Höheneinstellung der Stellvorrichtung zuverlässig verhindert.

Das erste Stellelement kann eine erste Führungsnut aufweisen und das zweite Stellelement kann eine zweite Führungsnut aufweisen. Das dritte Stellelement kann einen ersten Führungsvorsprung und einen zweiten Führungsvorsprung aufweisen. Der erste Führungsvorsprung kann in die erste Führungsnut eingreifen und der zweite Führungsvorsprung kann in die zweite Führungsnut eingreifen. Dadurch wird eine zuverlässige Bewegungsführung der Stellelemente realisiert.

Alternativ kann das dritte Stellelement eine erste Führungsnut und eine zweite Führungsnut aufweisen. Das erste Stellelement kann einen ersten Führungsvorsprung aufweisen und das zweite Stellelement kann einen zweiten Führungsvorsprung aufweisen. Der erste Führungsvorsprung kann in die erste Führungsnut eingreifen und der zweite Führungsvorsprung kann in die zweite Führungsnut eingreifen. Dadurch wird eine zuverlässige Bewegungsführung der Stellelemente realisiert.

Die Stellvorrichtung kann weiterhin ein viertes Stellelement umfassen. Das vierte Stellelement kann zwischen der Bodenplatte und der Tragplatte in einer vierten Richtung parallel zu der Symmetrieebene bewegbar sein. Das vierte Stellelement kann zwischen dem ersten Stellelement und dem zweiten Stellelement angeordnet sein und diese berühren. Die vierte Richtung kann der dritten Richtung entgegengesetzt sein. Gemeinsam mittels des dritten Stellelements und des vierten Stellelements können das erste Stellelement und das zweite Stellelement gemeinsam in der ersten Richtung und der zweiten Richtung bewegbar sein. Dies verringert den Bauraum noch deutlicher.

Das erste Stellelement und das zweite Stellelement können zueinander vorgespannt sein. Dadurch wird sichergestellt, dass das erste und zweite Stellelement an dem dritten Stellelement anliegen.

Die Bodenplatte und die Tragplatte können mittels Führungselementen miteinander verbunden sein. Dadurch wird sichergestellt, dass sich die Bodenplatte und die Tragplatte unabhängig von der gewählten Höhe der Stellvorrichtung in einer vorbestimmten Position relativ zueinander befinden.

Die Führungselemente können als Führungsstangen oder Führungsschrauben ausgebildet sein. Damit lassen sich die Bodenplatte und die Tragplatte in besonders einfacher Weise zueinander orientieren.

Die Stellvorrichtung kann weiterhin Federelemente umfassen. Die Federelemente können mit den Führungselementen derart verbunden sein, dass die Bodenplatte und die Tragplatte zueinander vorgespannt sind. Dadurch wird sichergestellt, dass das Gewicht der Bauteile der Stellvorrichtung zu keiner Separation von Bodenplatte und Tragplatte führt.

Das erste Stellelement und das zweite Stellelement können Führungslöcher aufweisen. Die Führungselemente können sich durch die Führungslöcher erstrecken. Dadurch werden auch das erste und zweite Stellelement sicher in ihrer Position gehalten.

Die Tragplatte kann zum Verbinden mit einem Stempel eines Umformwerkzeugs ausgebildet sein. Das Verbinden kann dabei direkt oder indirekt, wie beispielsweise mittels eines Druckstücks, erfolgen.

Die Stellvorrichtung kann mit einem Computer kommunikativ verbunden sein. Der Computer kann zum Steuern oder Regeln Höhe der Stellvorrichtung ausgebildet sein. Insbesondere kann der Computer zum Steuern oder Regeln einer Position des dritten Stellelements ausgebildet sein. Beispielsweise kann der Computer mit einem Motor verbunden sein, der wiederum mit dem dritten Stellelement direkt oder indirekt, wie beispielsweise mittels eines Verschiebeelements, verbunden ist. Der Motor kann zum Bewegen des dritten Stellelements ausgebildet sein. Durch Bewegen des dritten Stellelements an eine Soll-Position, kann eine Soll-Höhe der Stellvorrichtung eingestellt werden. Durch Erfassen einer Position des dritten Stellelements

In einem weiteren Aspekt der vorliegenden Erfindung wird ein Verfahren zum Betreiben einer Stellvorrichtung gemäß einer der vorstehend oder nachstehend beschriebenen Ausführungsformen vorgeschlagen. Das Verfahren umfasst Vorgeben einer Soll-Höhe der Stellvorrichtung und Bewegen des dritten Stellelements in der dritten Richtung an eine Soll-Position, die mit der Soll-Höhe korreliert.

Somit kann durch das Bewegen des dritten Stellelements in der dritten Richtung an eine Soll-Position, die einer Soll-Höhe entspricht bzw. mit dieser korreliert, eine Soll-Höhe der Stellvorrichtung eingestellt werden.

Das Bewegen des dritten Stellelements kann motorisch oder motorisch unterstützt erfolgen.

Das Verfahren kann computer-implementiert sein. Somit kann ein Bediener beispielsweise einen Computer zum Eingeben bzw. Vorgeben der Soll-Höhe verwenden. Der Computer kann wiederum kommunikativ mit dem dritten Stellelement oder einem mit diesem verbundenen Motor verbunden sein. Durch betätigen des Motors wird das dritte Stellelement an eine der Vorgabe entsprechende Soll-Position bewegt, so dass die Soll-Höhe eingestellt wird.

In einem weiteren Aspekt der vorliegenden Erfindung wird ein Umformwerkzeug vorgeschlagen. Das Umformwerkzeug weist mindestens einen Stempel und eine Stellvorrichtung nach einer der vorstehend oder nachstehend beschriebenen Ausführungsformen auf. Der Stempel ist mit der Tragplatte verbunden. Bei einem solchen Umformwerkzeug lässt sich in platzsparender Weise und schnell der Verfahrweg des Stempels einstellen.

Der Begriff "Stellvorrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf eine Vorrichtung zum Einstellen eines Abstands zwischen zwei gegenüberliegenden plattenförmigen Bauteilen beziehen. Diese plattenförmigen Bauteile werden im Rahmen der vorliegenden Offenbarung auch als Bodenplatte und Tragplatte bezeichnet. Durch das Einstellen des Abstands zwischen der Bodenplatte und Tragplatte wird ein mit der Tragplatte direkt oder indirekt verbundenes Bauteil linear bewegt, insbesondere von der Bodenplatte weg oder zu der Bodenplatte hinbewegt. Der Abstand zwischen der Bodenplatte und Tragplatte kann dabei vergleichsweise geringfügig variiert werden, insbesondere weniger als 10 mm bis hin zu 200 µm oder 150 µm. Bei dem mit der Tragplatte direkt oder indirekt verbundenen Bauteil kann es sich insbesondere um einen Stempel eines Umformwerkzeugs handeln. Der Begriff Stellvorrichtung kann sich somit, ohne Beschränkung, insbesondere auf eine Vorrichtung zum Einstellen und insbesondere zum Feineinstellen des Verfahrwegs eines Stempels eines Umformwerkzeugs in das Werkstück beziehen. Der Verfahrweg kann dabei eine vergleichsweise geringe Strecke von weniger als 10 mm bis hin zu 200 µm sein. Die Stellvorrichtung ist jedoch nicht auf eine Anwendung in Umformwerkzeugen beschränkt. Denkbar ist der Einsatz grundsätzlich in jeder Vorrichtung, in der ein Bauteil oder Gegenstand in seiner Position durch Bewegen verändert werden muss, indem die Höhe der Stellvorrichtung variiert wird. Weitere Anwendungsgebiete sind beispielsweise im Rahmen einer Hebevorrichtung, bei der ein Bauteil oder Gegenstand um eine bestimmte Strecke angehoben werden muss.

Der Begriff "Bodenplatte", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein plattenförmiges Bauteil einer Stellvorrichtung beziehen, das als Gegenlager für eine Bewegung einer Tragplatte der stellplatte dienen kann.

Der Begriff "Tragplatte", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein plattenförmiges Bauteil einer Stellvorrichtung beziehen, das relativ zu einer Bodenplatte bewegbar ist und das zum direkten oder indirekten verbinden mit einem zu bewegenden Bauteil ausgebildet ist.

Der Begriff "Stellelement", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein Bauteil einer Stellvorrichtung beziehen, das aufgrund seiner Form und Bewegung zum Variieren eines Abstands zwischen einer Tragplatte und einer Bodenplatte der Stellvorrichtung ausgebildet ist.

Der Begriff "Verschiebeelement", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein Bauteil einer Stellvorrichtung beziehen, das zum Durchführen einer verschiebenden und insbesondere linearen Bewegung ausgebildet ist und dadurch eine Bewegung des dritten Stellelements bewirkt.

Der Begriff "Umformwerkzeug", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf eine Maschine zum Umformen eines Werkstoffs oder Halbzeugs beziehen. Umformwerkzeuge bestehen in aller Regel aus einer Matrize, einem Stempel und einer Kavität. In Abhängigkeit von dem jeweiligen Umformwerkzeug kann dieses zusätzlich einen Gegenstempel als Gegenlager für den Stempel oder einen Auswerfer aufweisen. In den meisten Fällen führt der Stempel die zur Umformung benötigte Bewegung aus und die Matrize ist ortsfest. Dabei wird das eingebrachte Halbzeug verformt und in die Kavität gepresst. Die Kavität ist dabei in Abhängigkeit von dem jeweiligen Umformwerkzeug in dem Stempel oder in der Matrize angeordnet. Beispielsweise befindet sich die Kavität bei einem Umformwerkzeug für Voll-Vorwärtsfließpressen im Stempel und befindet sich bei einem Umformwerkzeug für Quer-Fließpressen in der Matrize.

Der Begriff "Umformen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein Fertigungsverfahren gemäß DIN8580 beziehen. In einem engeren Sinn kann sich der Begriff auf Massivumformen beziehen, bei dem ein dreidimensionaler Körper umgeformt wird. Es handelt sich also um Verfahren, bei denen Rohteile aus plastischen Werkstoffen, wie beispielsweise Metalle und thermoplastische Kunststoffe, gezielt in eine andere Form gebracht werden, ohne dabei Material von den Rohteilen zu entfernen wie beim Trennen oder hinzuzugeben wie beim Fügen. Der Werkstoff behält seine Masse und seinen Zusammenhalt bei. Beim Trennen und Fügen wird die Masse und der Zusammenhalt dagegen vermindert beziehungsweise vermehrt. Umformen unterscheidet sich von Verformen dadurch, dass die Formänderung gezielt eingebracht wird. Verformung dagegen ist eine ungezielte plastische Formänderung.

Der Begriff "Verfahrweg", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf diejenige Strecke beziehen, um die ein Bauteil oder Gegenstand in seiner Position variiert werden kann. Bei einem Umformwerkzeug kann sich der Verfahrweg beispielweise auf diejenige Strecke beziehen, um die der Stempel in ein Werkstück oder Halbzeug hineingedrückt oder -gepresst wird. Bei einer Hebevorrichtung kann sich der Verfahrweg auf diejenige Strecke beziehen, um die ein Bauteil oder Gegenstand angehoben werden kann. In diese, Fall kann der Verfahrweg auch als Hub bezeichnet werden.

Der Begriff "Halbzeug", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein Vormaterial beziehen, also vorgefertigtes Rohmaterial und Werkstücke oder Halbfabrikate der einfachsten Form. Sie bestehen in der Regel aus einem einzelnen Material, welches lediglich in eine grundlegende geometrische Form gebracht wurde. Als Halbzeuge werden beispielsweise einfache Profile (Profilstahl, Konstruktionsprofile), Stangen, Rohre und Platten aus Metall bezeichnet. Werkstücke, die bereits in einem vorbereitenden Fertigungsschritt eine individuelle Form erhalten haben, aber noch für weitere Fertigungsschritte vorgesehen sind, werden auch als Rohling bezeichnet. Der Ausdruck Halbzeug kann sich somit auf ein Material im ungeformten Zustand sowie in einem Zustand während einer Umformung und somit im teilweisen umgeformten Zustand beziehen. Nach Abschluss der Umformung und somit im fertig umgeformten Zustand wird das Halbzeug als Pressteil oder Bauteil bezeichnet.

Der Begriff "Werkstück", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein einzelnes abgegrenztes Teil weitgehend festen Materials beziehen, das in irgendeiner Form bearbeitet wurde. Mit anderen Worten, kann sich der Begriff Werkstück auf ein Halbzeug beziehen, das in der Verarbeitungskette bereits mindestens einen Verarbeitungsschritt durchlaufen hat und das für einen weiteren Verarbeitungsschritt vorgesehen ist.

Der Begriff "Bauteil", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein fertig bearbeitetes Werkstück beziehen. Mit anderen Worten, kann sich der Begriff Bauteil auf ein Werkstück beziehen, das in der Verarbeitungskette bereits sämtliche Verarbeitungsschritte durchlaufen hat.

Der Begriff "Fließpressen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein Fertigungsverfahren gemäß DIN8583 beziehen. Hierbei handelt es sich um ein Massivumformungsverfahren, das durch einen einstufigen oder mehrstufigen Fertigungsvorgang sowohl Hohl- als auch Vollkörper erstellt. Beim Fließpressen handelt es sich um ein Umformverfahren, bei dem vorwiegend eine Druckbeanspruchung zum umzuformenden Werkstück vorliegt. Die Fließpressverfahren sind in der DIN 8583-6 näher beschrieben und werden dort zusätzlich anhand der Querschnittsform vor Beginn der Umformung näher unterteilt. Wird der Querschnitt des Rohteils nicht durch Aussparungen vermindert, so wird vom Voll-Fließpressen, bei vermindertem Querschnitt vom Hohl-Fließpressen gesprochen. Weiterhin ist eine Unterscheidung nach der Fließrichtung des Werkstoffs relativ zur Stempelbewegungsrichtung möglich. Hierbei haben sich folgende Unterscheidungen herauskristallisiert. Beim Vorwärtsfließpressen sind Werkstofffluss und Stempelbewegungsrichtung gleich. Beim Rückwärtsfließpressen sind Werkstofffluss und Stempelbewegungsrichtung entgegengesetzt. Beim Querfließpressen ist der Werkstofffluss quer zur Stempelbewegungsrichtung. Eine Kombination dieser drei Fließpressverfahren ist möglich. Fließpresswerkzeuge bestehen in aller Regel aus einer Matrize und einem Stempel. In den meisten Fällen führt der Stempel die zur Umformung benötigte Bewegung aus und die Matrize ist ortsfest. Der Gegenstempel kann auch als sogenannter Auswerfer ausgebildet oder verbunden sein. Ein solcher Auswerfer dient zum Auswerfen des durch Umformen hergestellten Pressteils aus der Matrize.

Ferner wird im Rahmen der vorliegenden Offenbarung ein Computerprogramm vorgeschlagen, das bei Ablauf auf einem Computer oder Computer-Netzwerk das erfindungsgemäße Verfahren in einer seiner Ausgestaltungen ausführt.

Weiterhin wird im Rahmen der vorliegenden Offenbarung ein Computerprogramm mit Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger und/oder einem computerlesbaren Speichermedium gespeichert sein.

Der Begriffe "computerlesbarer Datenträger" und "computerlesbares Speichermedium", wie sie hier verwendet werden, können sich insbesondere auf nicht-transitorische Datenspeicher beziehen, beispielsweise ein Hardware-Datenspeichermedium, auf welchem computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-Only Memory (ROM) sein oder umfassen.

Außerdem wird im Rahmen der vorliegenden Offenbarung ein Datenträger vorgeschlagen, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann.

Auch wird im Rahmen der vorliegenden Offenbarung ein Computerprogramm-Produkt mit auf einem maschinenlesbaren Träger gespeicherten Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Daten-übertragungsnetz verteilt werden.

Schließlich wird im Rahmen der vorliegenden Offenbarung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Im Hinblick auf die computer-implementierten Aspekte der Offenbarung können einer, mehrere oder sogar alle Verfahrensschritte des Verfahrens gemäß einer oder mehreren der hier vorgeschlagenen Ausgestaltungen mittels eines Computers oder Computer-Netzwerks durchgeführt werden. Somit können, allgemein, jegliche der Verfahrensschritte, einschließlich der Bereitstellung und/oder Manipulation von Daten mittels eines Computers oder Computer-Netzwerks durchgeführt werden. Allgemein können diese Schritte jegliche der Verfahrensschritte umfassen, ausgenommen der Schritte, welche manuelle Arbeit erfordern, beispielsweise das Bereitstellen von Proben und/oder bestimmte Aspekte der Durchführung tatsächlicher Messungen.

Zusammenfassend werden, ohne Beschränkung weiterer möglicher Ausgestaltungen, folgende Ausführungsformen vorgeschlagen:
In einer Ausführungsform umfasst eine Stellvorrichtung,
eine Bodenplatte,
eine Tragplatte, wobei die Tragplatte relativ zu der Bodenplatte bewegbar ist, wobei die Tragplatte auf einer der Bodenplatte zugewandten Oberseite eine erste schiefe Ebene und eine zweite schiefe Ebene aufweist, wobei die erste schiefe Ebene und die zweite schiefe Ebene zueinander spiegelsymmetrisch zu einer Symmetrieebene angeordnet sind,
ein erstes Stellelement, wobei das erste Stellelement in einer ersten Richtung auf der ersten schiefen Ebene bewegbar angeordnet ist, wobei das erste Stellelement die Bodenplatte berührt,
ein zweites Stellelement, wobei das zweite Stellelement in einer zweiten Richtung auf der zweiten schiefen Ebene bewegbar angeordnet ist, wobei die zweite Richtung der ersten Richtung entgegengesetzt ist, wobei das zweite Stellelement die Bodenplatte berührt, und
mindestens ein drittes Stellelement, wobei das dritte Stellelement zwischen der Bodenplatte und der Tragplatte in einer dritten Richtung parallel zu der Symmetrieebene bewegbar ist, wobei das dritte Stellelement zwischen dem ersten Stellelement und dem zweiten Stellelement angeordnet ist und diese berührt, wobei mittels des dritten Stellelements das erste Stellelement und das zweite Stellelement gemeinsam in der ersten Richtung und der zweiten Richtung bewegbar sind, wobei die erste Richtung und die zweite Richtung spiegelsymmetrisch zu der Symmetrieebene sind.

In einer weiteren Ausführungsform ist die dritte Richtung parallel zu einer der Tragplatte abgewandten Oberseite der Bodenplatte.

In einer weiteren Ausführungsform sind die erste Richtung und die zweite Richtung senkrecht zu der dritten Richtung.

In einer weiteren Ausführungsform sind die erste schiefe Ebene und die zweite schiefe Ebene so spiegelsymmetrisch zu einer Symmetrieebene zueinander angeordnet, dass eine Höhe der Tragplatte mit zunehmenden Abstand senkrecht zu der Symmetrieebene zunimmt.

In einer weiteren Ausführungsform sind das erste Stellelement, das zweite Stellelement und/oder das dritte Stellelement im Wesentlichen keilförmig ausgebildet.

In einer weiteren Ausführungsform weist das dritte Stellelement zwei gegenüberliegende Außenflächen auf, wobei die Außenflächen des dritten Stellelements zueinander spiegelsymmetrisch zu der Symmetrieebene und bezüglich der dritten Richtung geneigt angeordnet sind, wobei das erste Stellelement und das zweite Stellelement jeweils eine Außenfläche aufweisen, wobei die Außenflächen des ersten Stellelements und des zweiten Stellelement komplementär zu den Außenflächen des dritten Stellelements zu der dritten Richtung geneigt sind, wobei das dritte Stellelement, das erste Stellelement und das zweite Stellelement an den Außenflächen einander berühren.

In einer weiteren Ausführungsform ist die Tragplatte durch eine Bewegung des ersten Stellelements und des zweiten Stellelements im Wesentlichen parallel zu der Symmetrieebene und senkrecht zu der dritten Richtung relativ zu der Bodenplatte bewegbar.

In einer weiteren Ausführungsform weist das erste Stellelement eine Unterseite auf, die komplementär zu der ersten schiefen Ebene der Tragplatte geneigt ist, wobei das zweite Stellelement eine Unterseite aufweist, die komplementär zu der zweiten schiefen Ebene der Tragplatte geneigt ist.

In einer weiteren Ausführungsform weist die Bodenplatte eine ebene Unterseite auf.

In einer weiteren Ausführungsform weist die Bodenplatte eine Unterseite mit einer ersten schiefen Ebene und einer zweiten schiefen Ebene auf, wobei die erste schiefe Ebene und die zweite schiefe Ebene der Bodenplatte zueinander spiegelsymmetrisch zu der Symmetrieebene angeordnet sind.

In einer weiteren Ausführungsform weist das erste Stellelement eine Oberseite auf, die komplementär zu der ersten schiefen Ebene der Bodenplatte geneigt ist, wobei das zweite Stellelement eine Oberseite aufweist, die komplementär zu der zweiten schiefen Ebene der Bodenplatte geneigt ist.

In einer weiteren Ausführungsform ist das dritte Stellelement auf der Tragplatte bewegbar angeordnet.

In einer weiteren Ausführungsform umfasst die Stellvorrichtung weiterhin ein Dämpfungselement, wobei das Dämpfungselement auf einer Oberseite der Bodenplatte angeordnet ist.

In einer weiteren Ausführungsform umfasst die Stellvorrichtung weiterhin ein Verschiebelement, wobei das Verschiebeelement mit dem dritten Stellelement verbunden ist, wobei das Verschiebeelement zum Bewegen des dritten Stellelements ausgebildet ist.

In einer weiteren Ausführungsform ist das Verschiebeelement stangenförmig ausgebildet.

In einer weiteren Ausführungsform ist das Verschiebeelement manuell, hydraulisch, pneumatisch und/oder motorisch bewegbar.

In einer weiteren Ausführungsform weist das Verschiebeelement eine Spindel oder eine Stange auf, wobei die Spindel oder die Zahnstange mit dem Motor in Eingriff bringbar sind.

In einer weiteren Ausführungsform umfasst die Stellvorrichtung weiterhin ein Fixierelement, wobei das Fixierelement zum Fixieren des Verschiebelements in einer vorbestimmten Position ausgebildet ist.

In einer weiteren Ausführungsform weist das erste Stellelement eine erste Führungsnut auf und das zweite Stellelement weist eine zweite Führungsnut auf, wobei das dritte Stellelement einen ersten Führungsvorsprung und einen zweiten Führungsvorsprung aufweist, oder
das dritte Stellelement weist eine erste Führungsnut und eine zweite Führungsnut auf, wobei das erste Stellelement einen ersten Führungsvorsprung aufweist und einen das zweite Stellelement einen zweiten Führungsvorsprung aufweist,
wobei der erste Führungsvorsprung in die erste Führungsnut eingreift und der zweite Führungsvorsprung in die zweite Führungsnut eingreift.

In einer weiteren Ausführungsform umfasst die Stellvorrichtung weiterhin ein viertes Stellelement, wobei das vierte Stellelement zwischen der Bodenplatte und der Tragplatte in einer vierten Richtung parallel zu der Symmetrieebene bewegbar ist, wobei das vierte Stellelement zwischen dem ersten Stellelement und dem zweiten Stellelement angeordnet ist und diese berührt, wobei die vierte Richtung der dritten Richtung entgegengesetzt ist, wobei gemeinsam mittels des dritten Stellelements und des vierten Stellelements das erste Stellelement und das zweite Stellelement gemeinsam in der ersten Richtung und der zweiten Richtung bewegbar sind.

In einer weiteren Ausführungsform sind das erste Stellelement und das zweite Stellelement zueinander vorgespannt.

In einer weiteren Ausführungsform sind die Bodenplatte und die Tragplatte mittels Führungselementen miteinander verbunden.

In einer weiteren Ausführungsform sind die Führungselemente als Führungsstangen oder Führungsschrauben ausgebildet.

In einer weiteren Ausführungsform umfasst die Stellvorrichtung weiterhin Federelemente, wobei die Federelemente mit den Führungselementen derart verbunden sind, dass die Bodenplatte und die Tragplatte zueinander vorgespannt sind.

In einer weiteren Ausführungsform weisen das erste Stellelement und das zweite Stellelement Führungslöcher auf, wobei die Führungselemente sich durch die Führungslöcher erstrecken.

In einer weiteren Ausführungsform ist die Tragplatte zum Verbinden mit einem Stempel eines Umformwerkzeugs ausgebildet.

In einer Ausführungsform umfasst ein Umformwerkzeug mindestens einen Stempel und eine Stellvorrichtung nach einer der vorhergehenden Ausführungsformen, wobei der Stempel mit der Tragplatte verbunden.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

### Im Einzelnen zeigen:

- Figur 1: eine Vorderansicht einer Stellvorrichtung gemäß einer ersten Ausführungsform in einer ersten Stellung;
- Figur 2: eine Schnittansicht der Stellvorrichtung der ersten Ausführungsform entlang der Linie A-A der Figur 1;
- Figur 3: eine Vorderansicht der Stellvorrichtung gemäß der ersten Ausführungsform in einer zweiten Stellung;
- Figur 4: eine Schnittansicht der Stellvorrichtung der ersten Ausführungsform entlang der Linie A-A der Figur 3;
- Figur 5: eine Vorderansicht einer Stellvorrichtung gemäß einer zweiten Ausführungsform;
- Figur 6: eine Vorderansicht einer Stellvorrichtung gemäß einer dritten Ausführungsform;
- Figur 7: eine Vorderansicht einer Stellvorrichtung gemäß einer vierten Ausführungsform;
- Figur 8: eine Schnittansicht einer Stellvorrichtung gemäß einer fünften Ausführungsform;
- Figur 9: eine perspektivische Ansicht einer Stellvorrichtung gemäß einer sechsten Ausführungsform in einer ersten Stellung;
- Figur 10: eine perspektivische Ansicht der Stellvorrichtung gemäß der sechsten Ausführungsform in der ersten Stellung ohne Bodenplatte;
- Figur 11: eine perspektivische Ansicht der Stellvorrichtung gemäß der sechsten Ausführungsform in einer zweiten Stellung;
- Figur 12: eine perspektivische Ansicht der Stellvorrichtung gemäß der sechsten Ausführungsform in der zweiten Stellung ohne Bodenplatte;
- Figur 13: eine perspektivische Ansicht der Stellvorrichtung gemäß der sechsten Ausführungsform und einer Antriebsvorrichtung;
- Figur 14: eine perspektivische Ansicht eines Umformwerkzeugs; und
- Figur 15: eine Schnittansicht des Umformwerkzeugs.

### Beschreibung der Ausführungsbeispiele

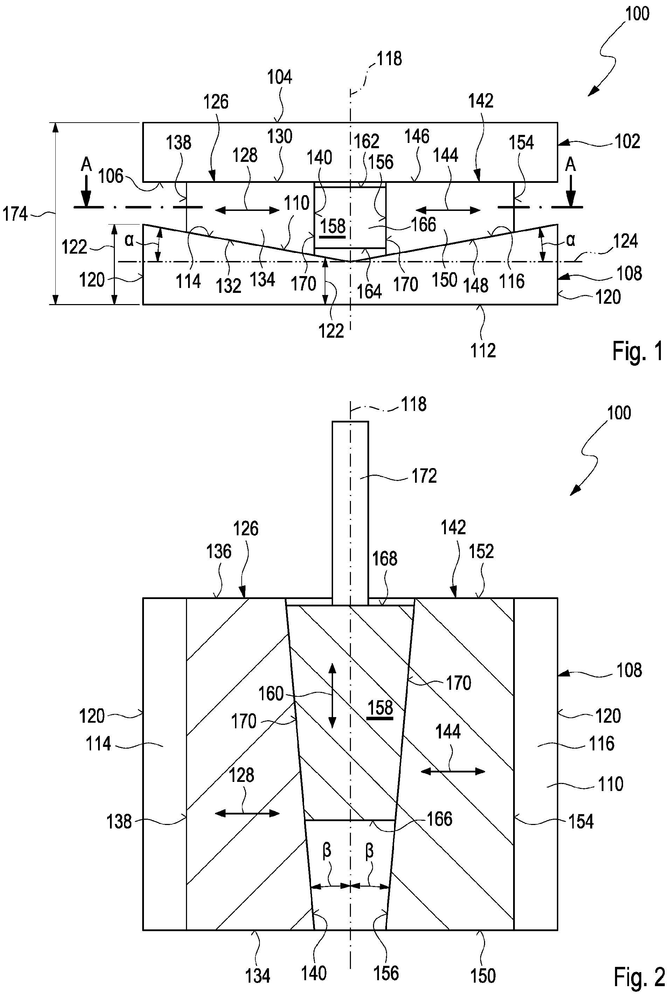

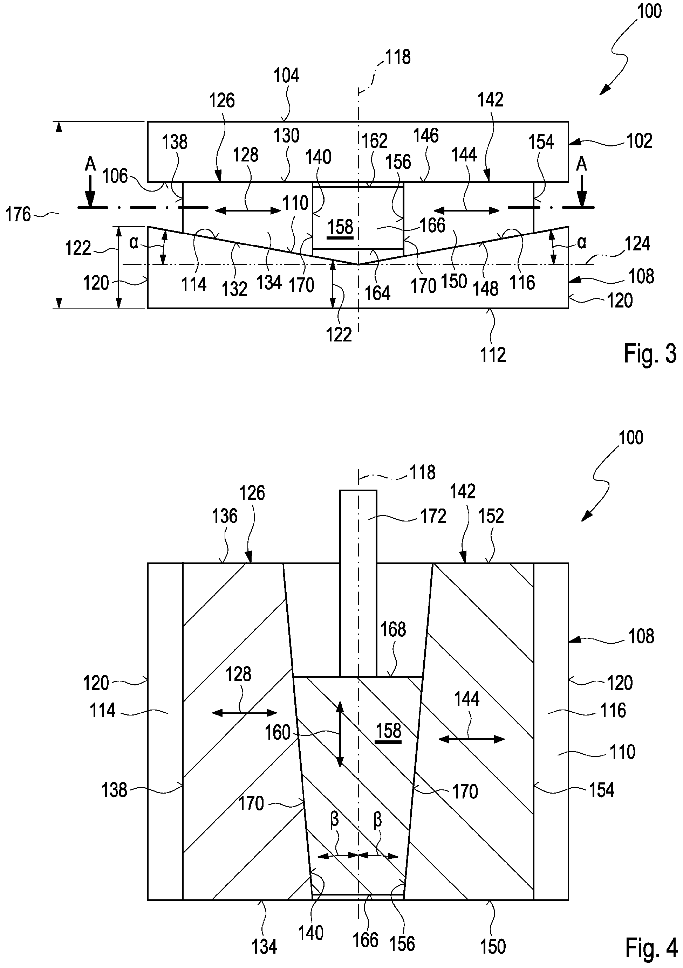

Figur 1 zeigt eine Vorderansicht einer Stellvorrichtung 100 gemäß einer ersten Ausführungsform in einer ersten Stellung. Figur 2 zeigt eine Schnittansicht der Stellvorrichtung 100 der ersten Ausführungsform entlang der Linie A-A der Figur 1. Figur 3 zeigt eine Vorderansicht der Stellvorrichtung 100 gemäß der ersten Ausführungsform in einer zweiten Stellung. Figur 4 zeigt eine Schnittansicht der Stellvorrichtung 100 der ersten Ausführungsform entlang der Linie A-A der Figur 3.

Die Stellvorrichtung 100 weist eine Bodenplatte 102 auf. Die Bodenplatte 102 ist bei der gezeigten ersten Ausführungsform im Wesentlichen quaderförmig ausgebildet. Entsprechend weist die Bodenplatte 102 unter anderem eine ebene Oberseite 104 und eine ebene Unterseite 106 auf.

Die Stellvorrichtung 100 weist weiterhin eine Tragplatte 108 auf. Wie nachstehend ausführlicher erläutert ist, ist die Tragplatte 108 relativ zu der Bodenplatte 102 bewegbar. Die Tragplatte 108 ist von der Bodenplatte 102 beabstandet und liegt dieser gegenüber. Die Tragplatte 108 weist eine Oberseite 110 und eine Unterseite 112 auf. Die Unterseite 112 der Tragplatte 108 ist eben und der Bodenplatte 102 abgewandt. Die Oberseite 110 der Tragplatte 108 ist der Bodenplatte 102 zugewandt. Auf der der Bodenplatte 102 zugewandten Oberseite 110 weist die Tragplatte 108 eine erste schiefe Ebene 114 und eine zweite schiefe Ebene 116 auf. Die erste schiefe Ebene 114 und die zweite schiefe Ebene 114 der Tragplatte 108 sind zueinander spiegelsymmetrisch zu einer Symmetrieebene 118 angeordnet. Die Symmetrieebene 118 erstreckt sich dabei senkrecht zu der Unterseite 112 der Tragplatte 108 und parallel zu Seitenflächen 120 der Tragplatte 108. Bezüglich der Darstellung der Figur 1 erstreckt sich die Symmetrieebene 118 in die Zeichenebene hinein bzw. heraus. Die erste schiefe Ebene 114 und die zweite schiefe Ebene 116 der tragplatte 108 sind so spiegelsymmetrisch zu der Symmetrieebene 118 zueinander angeordnet, dass eine Höhe 122 der Tragplatte 108 mit zunehmenden Abstand senkrecht zu der Symmetrieebene 118 zunimmt. Mit anderen Worten nimmt die Höhe 122 der Tragplatte 108 in Richtung zu der Symmetrieebene 118 hin ab. Die erste schiefe Ebene 114 und die zweite schiefe Ebene 116 der Tragplatte 108 sind jeweils bezüglich einer imaginären Ebene 124 parallel zur Unterseite 112 der Tragplatte 108 in einem Winkel α von 0,25° bis 30°, bevorzugt von 0,5° bis 10° und noch bevorzugter 1,0° bis 5,0° geneigt, wie beispielsweise 3,0°.

Die Stellvorrichtung 100 weist weiterhin ein erstes Stellelement 126 auf. Das erste Stellelement 126 ist auf der ersten schiefen Ebene 114 der Tragplatte 108 in einer ersten Richtung 128 bewegbar angeordnet. Dabei berührt das erste Stellelement 126 die Bodenplatte 102. Das erste Stellelement 126 ist im Wesentlichen keilförmig ausgebildet. So weist das erste Stellelement 126 eine ebene Oberseite 130, die der Unterseite 106 der Bodenplatte 102 zugewandt ist, eine zu der ersten schiefen Ebene 114 komplementär geneigte Unterseite 132, die der Oberseite 110 der Tragplatte 108 zugewandt ist, eine ebene Vorderseite 134, eine ebene Rückseite 136, eine ebene, der Symmetrieebene 118 abgewandte außenseitige Außenfläche 138 und eine bezüglich der Symmetrieebene 118 geneigte innenseitige Außenfläche 140 auf. Die innenseitige Außenfläche 140 ist in einem Winkel β von 0,25° bis 30°, bevorzugt von 0,5° bis 10° und noch bevorzugter 1,0° bis 5,0° geneigt, wie beispielsweise 3,0°.

Die Stellvorrichtung 100 weist weiterhin ein zweites Stellelement 142 auf. Das zweite Stellelement 142 ist auf der zweiten schiefen Ebene 116 der Tragplatte 108 in einer zweiten Richtung 144 bewegbar angeordnet. Die zweite Richtung 144 ist der ersten Richtung 128 entgegengesetzt. Dabei berührt das zweite Stellelement 142 die Bodenplatte 102. Das zweite Stellelement 142 ist im Wesentlichen keilförmig ausgebildet. So weist das zweite Stellelement 142 eine ebene Oberseite 146, die der Unterseite 106 der Bodenplatte 102 zugewandt ist, eine zu der zweiten schiefen Ebene 116 komplementär geneigte Unterseite 148, die der Oberseite 110 der Tragplatte 108 zugewandt ist, eine ebene Vorderseite 150, eine ebene Rückseite 152, eine ebene, der Symmetrieebene 118 abgewandte außenseitige Außenfläche 154 und eine bezüglich der Symmetrieebene 118 geneigte innenseitige Außenfläche 156 auf. Die geneigten innenseitigen Außenflächen 140, 156 des ersten Stellelements 126 und des zweiten Stellelements 142 sind dabei spiegelsymmetrisch bezüglich der Symmetrieebene 118 zueinander geneigt. Das erste Stellelement 126 und das zweite Stellelement 142 können zueinander bzw. in Richtung der Symmetrieebene 118 vorgespannt sein, wie beispielsweise mittels nicht näher dargestellter Federn.

Die Stellvorrichtung 100 weist weiterhin mindestens ein drittes Stellelement 158 auf. Das dritte Stellelement 158 ist zwischen der Bodenplatte 102 und der Tragplatte 108 in einer dritten Richtung 160 parallel zu der Symmetrieebene 118 bewegbar. Bezüglich der Darstellung der Figur 1 verläuft die dritte Richtung 160 in die Zeichenebene hinein bzw. heraus. Weiterhin ist das dritte Stellelement 158 zwischen dem ersten Stellelement 126 und dem zweiten Stellelement 142 angeordnet ist und berührt diese. Dahingegen ist das dritte Stellelement 158 von der Bodenplatte 102 und der Tragplatte 108 beabstandet und berührt diese somit nicht. Das dritte Stellelement 158 ist im Wesentlichen keilförmig ausgebildet. Das dritte Stellelement 158 weist eine ebene Oberseite 162, die der Unterseite 106 der Bodenplatte 102 zugewandt ist, eine ebene Unterseite 164, die der Oberseite 112 der Tragplatte 108 zugewandt ist, eine ebene Vorderseite 166, eine ebene Rückseite 168 und zwei sich gegenüberliegende seitliche Außenflächen 170 auf. Die Außenflächen 170 des dritten Stellelements 158 sind zueinander spiegelsymmetrisch zu der Symmetrieebene 118 angeordnet. Weiterhin sind die Außenflächen 170 des dritten Stellelements 158 bezüglich der dritten Richtung 160 geneigt. Die innenseitigen Außenflächen 140, 156 des ersten Stellelements 126 und des zweiten Stellelement 142 sind komplementär zu den Außenflächen 170 des dritten Stellelements 158 zu der dritten Richtung 160 geneigt. Das dritte Stellelement 158, das erste Stellelement 126 und das zweite Stellelement 142 berühren einander an den Au-βenflächen 140, 156, 170.

Mittels des dritten Stellelements 158 sind das erste Stellelement 126 und das zweite Stellelement 142 gemeinsam bzw. zeitgleich in der ersten Richtung 128 und der zweiten Richtung 140 bewegbar. Dabei sind die erste Richtung 128 und die zweite Richtung 144 spiegelsymmetrisch zu der Symmetrieebene 118. Mit anderen Worten werden das erste Stellelement 126 und das zweite Stellelement 142 gegenläufig mittels des dritten Stellelements 158 bewegt wie nachstehend ausführlicher erläutert wird. Dabei ist die dritte Richtung 160 parallel zu der der Tragplatte 108 abgewandten Oberseite 104 der Bodenplatte 102. Außerdem sind die erste Richtung 128 und die zweite Richtung 144 senkrecht zu der dritten Richtung 160. Die Tragplatte 108 ist durch eine Bewegung des ersten Stellelements 126 und des zweiten Stellelements 142 im Wesentlichen parallel zu der Symmetrieebene 118 und senkrecht zu der dritten Richtung 160 relativ zu der Bodenplatte 102 bewegbar.

Die Stellvorrichtung 100 weist weiterhin ein Verschiebelement 172 auf. Das Verschiebeelement 172 ist stangenförmig ausgebildet. Das Verschiebeelement 172 ist mit dem dritten Stellelement 158 verbunden. So ist das Verschiebeelement 172 mit der im Vergleich zu der Vorderseite 166 des dritten Stellelements 158 breiteren Rückseite 168 des dritten Stellelements 158 verbunden. Es versteht sich jedoch, dass alternativ das Verschiebeelement 172 mit der schmaleren Vorderseite 166 des dritten Stellelements 158 verbunden sein kann. Das Verschiebeelement 172 ist zum Bewegen des dritten Stellelements 158 ausgebildet. Das Verschiebeelement 172 ist grundsätzlich manuell, hydraulisch, pneumatisch und/oder motorisch bewegbar. Bevorzugt ist das Verschiebeelement 172 mittels eines nicht näher gezeigten Motors bewegbar. So kann das Verschiebeelement 172 eine nicht näher gezeigte Spindel oder eine nicht näher gezeigte Stange aufweisen, die mit dem Motor in Eingriff bringbar sind. Optional kann die Stellvorrichtung 100 weiterhin ein nicht näher gezeigtes Fixierelement aufweisen, das zum Fixieren des Verschiebeelements 172 in einer vorbestimmten Position ausgebildet ist.

Es wird explizit betont, dass die beschriebenen Winkel α und β jeweils vorzugsweise so zu wählen sind, dass eine Selbsthemmung des ersten Stellelements 126 und des zweiten Stellelements 142 entlang der Tragplatte 108 sowie des ersten Stellelement 126, des zweiten Stellelement 142 und des dritten Stellelements 158 entsteht.

Optional kann die Stellvorrichtung 100 mit einem nicht näher gezeigten Computer kommunikativ verbunden sein. Der Computer kann zum Vorgeben einer Soll-Höhe der Stellvorrichtung 100 ausgebildet sein. Der Computer kann weiterhin zum Bewegen des dritten Stellelements 158 ausgebildet sein. So kann das dritte Stellelement 158 insbesondere an eine Soll-Position, die der Soll-Höhe entspricht bzw. mit dieser korreliert bewegt werden. Beispielsweise kann der Computer zum Ausgeben eines Signals an einen Motor, der mit dem dritten Stellelement verbunden ist, ausgebildet sein, wobei das Signal eine Vorgabe für die Soll-Position des dritten Stellelements 158 enthält.

Nachstehend wird die Betriebsweise der Stellvorrichtung 100 näher anhand der Figuren 1 bis 4 erläutert. Die Figuren 1 und 2 zeigen die Stellvorrichtung 100 in einer ersten Stellung. Die Figuren 3 und 4 zeigen die Stellvorrichtung 100 in einer zweiten Stellung. In der ersten Stellung befindet sich das dritte Stellelement 158 in der dritten Richtung gesehen an einer Rückseite der Stellvorrichtung 100 angrenzend, was durch eine Bewegung des dritten Stellelements 158 in die Zeichenebene der Figuren 1 und 3 hinein erfolgt. Die Bewegung des dritten Stellelements 158 erfolgt dabei mittels des Verschiebeelements 172. Dabei befinden sich das erste Stellelement 126 und das zweite Stellelement 142 nahe zusammen und in der Nähe der Symmetrieebene 118, was durch eine Bewegung auf der ersten schiefen Ebene 114 und der zweiten schiefen Ebene 116 der Tragplatte 108 in der ersten Richtung 128 und der zweiten Richtung 144 nach innen erfolgt. Das erste Stellelement 126 und das zweite Stellelement 142 werden dabei indirekt mittels des dritten Stellelements 158 bewegt. Dadurch befindet sich die Tragplatte 108 in einer an die Bodenplatte 102 angenäherten Stellung, da der Abstand zwischen diesen verringert ist. Die Stellvorrichtung 100 weist dadurch eine erste Höhe 174 auf.

In der zweiten Stellung befindet sich das dritte Stellelement 158 in der dritten Richtung gesehen an einer Vorderseite der Stellvorrichtung 100 angrenzend, was durch eine Bewegung des dritten Stellelements 158 aus der Zeichenebene der Figuren 1 und 3 heraus erfolgt. Die Bewegung des dritten Stellelements 158 erfolgt dabei mittels des Verschiebeelements 172. Dabei befinden sich das erste Stellelement 126 und das zweite Stellelement 142 entfernt voneinander und entfernt von der Symmetrieebene 118, was durch eine Bewegung auf der ersten schiefen Ebene 114 und der zweiten schiefen Ebene 116 der Tragplatte 108 in der ersten Richtung 128 und der zweiten Richtung 144 nach außen erfolgt. Das erste Stellelement 126 und das zweite Stellelement 142 werden dabei indirekt mittels des dritten Stellelements 158 bewegt. Dadurch befindet sich die Tragplatte 108 in einer von der Bodenplatte 102 entfernten Stellung, da der Abstand zwischen diesen vergrößert ist. Die Stellvorrichtung 100 weist dadurch eine zweite Höhe 176 auf. Die zweite Höhe 176 ist größer als die erste Höhe 174. Es wird explizit betont, dass die Stellvorrichtung 100 aufgrund der Beweglichkeiten des ersten Stellelements 126, zweiten Stellelements 142 und dritten Stellelements 158 stufenlos verstellbar ist. Entsprechend sind die gezeigte erste und zweite Stellung lediglich zwei beispielhafte mögliche Stellungen.

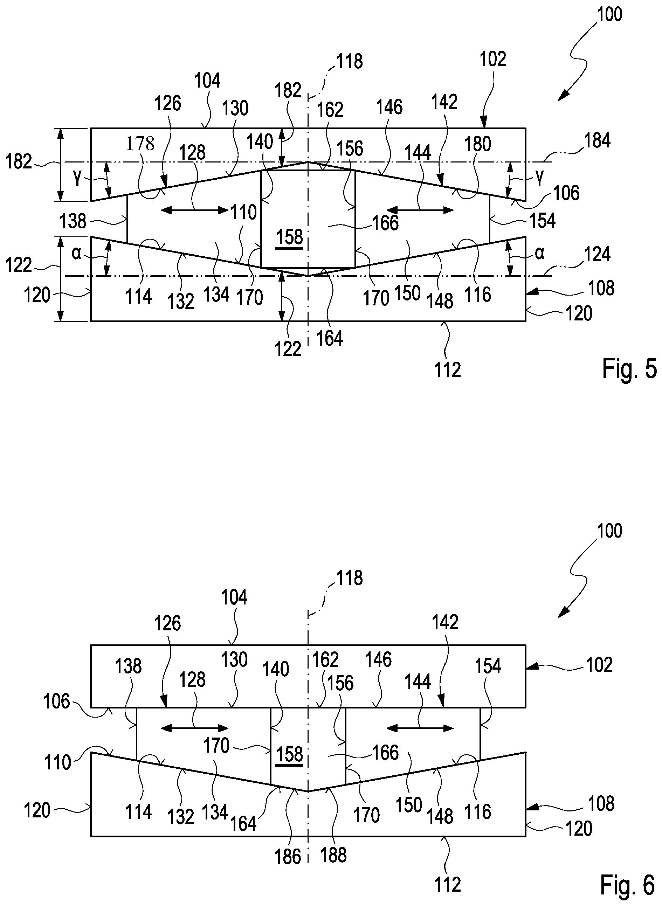

Figur 5 zeigt eine Vorderansicht einer Stellvorrichtung 100 gemäß einer zweiten Ausführungsform. Nachstehend werden lediglich die Unterschiede zur Stellvorrichtung 100 der ersten Ausführungsform beschrieben und gleiche oder vergleichbare Bauteile und Merkmale sind mit gleichen Bezugszeichen versehen. Bei der Stellvorrichtung 100 der zweiten Ausführungsform weist die Bodenplatte 102 eine Unterseite 106 mit einer ersten schiefen Ebene 178 und einer zweiten schiefen Ebene 180 auf. Die erste schiefe Ebene 178 der Bodenplatte 102 und die zweite schiefe Ebene 180 der Bodenplatte 102 sind zueinander spiegelsymmetrisch zu der Symmetrieebene 118 angeordnet sind. Die erste schiefe Ebene 178 der Bodenplatte 102 und die zweite schiefe Ebene 180 der Bodenplatte 102 sind dabei so geneigt, dass eine Höhe 182 der Bodenplatte 102 nach außen bzw. von der Symmetrieebene 118 weg zunimmt. Insbesondere sind die erste schiefe Ebene 178 der Bodenplatte 102 und die zweite schiefe Ebene 180 der Bodenplatte 102 spiegelsymmetrisch zu der ersten schiefen Ebene 114 der Tragplatte 108 und zweiten schiefen Ebene 116 der Tragplatte 108 ausgebildet. Entsprechend sind die erste schiefe Ebene 178 und die zweite schiefe Ebene 180 der Bodenplatte 102 sind jeweils bezüglich einer imaginären Ebene 184 parallel zur Oberseite der Bodenplatte 102 in einem Winkel γ von 0,25° bis 30°, bevorzugt von 0,5° bis 10° und noch bevorzugter 1,0° bis 5,0° geneigt, wie beispielsweise 3,0°. Es versteh sich jedoch, dass sich der Neigungswinkel γ der ersten schiefen Ebene 178 und die zweiten schiefen Ebene 180 der Bodenplatte 102 von dem Neigungswinkel α der ersten schiefen Ebene 114 und die zweiten schiefen Ebene 116 der Tragplatte 108 unterscheiden kann. Der Winkel γ ist vorzugsweise so zu wählen, dass eine Selbsthemmung des ersten Stellelements 126 und des zweiten Stellelements 142 entlang der Bodenplatte 102 entsteht.

Das erste Stellelement 126 und das zweite Stellelement 142 weisen jeweils eine komplementär zu der ersten schiefen Ebene 178 und der zweiten schiefen Ebene 180 der Bodenplatte 102 geneigte Oberseite 130, 146 auf. Die Betriebsweise der Stellvorrichtung 100 der zweiten Ausführungsform ist grundsätzlich identisch zur Betriebsweise der Stellvorrichtung 100 der ersten Ausführungsform.

Figur 6 zeigt eine Vorderansicht einer Stellvorrichtung 100 gemäß einer dritten Ausführungsform. Nachstehend werden lediglich die Unterschiede zur Stellvorrichtung 100 der ersten Ausführungsform beschrieben und gleiche oder vergleichbare Bauteile und Merkmale sind mit gleichen Bezugszeichen versehen. Bei der Stellvorrichtung 100 der dritten Ausführungsform ist das dritte Stellelement 158 auf der Tragplatte 108 bewegbar angeordnet und berühr diese somit. Dabei ist die Unterseite 164 des dritten Stellelements 158 mit einer ersten schiefen Ebene 186 und einer zweiten schiefen Ebene 188 ausgebildet. Die erste schiefe Ebene 186 des dritten Stellelements 158 ist komplementär zu der ersten schiefen Ebene 114 der Tragplatte 108 ausgebildet. Die zweite schiefe Ebene 188 des dritten Stellelements 158 ist komplementär zu der zweiten schiefen Ebene 116 der Tragplatte 108 ausgebildet. Außerdem berührt das dritte Stellelement 158 die Bodenplatte 102. Die Betriebsweise der Stellvorrichtung 100 der dritten Ausführungsform ist grundsätzlich identisch zur Betriebsweise der Stellvorrichtung 100 der ersten Ausführungsform.

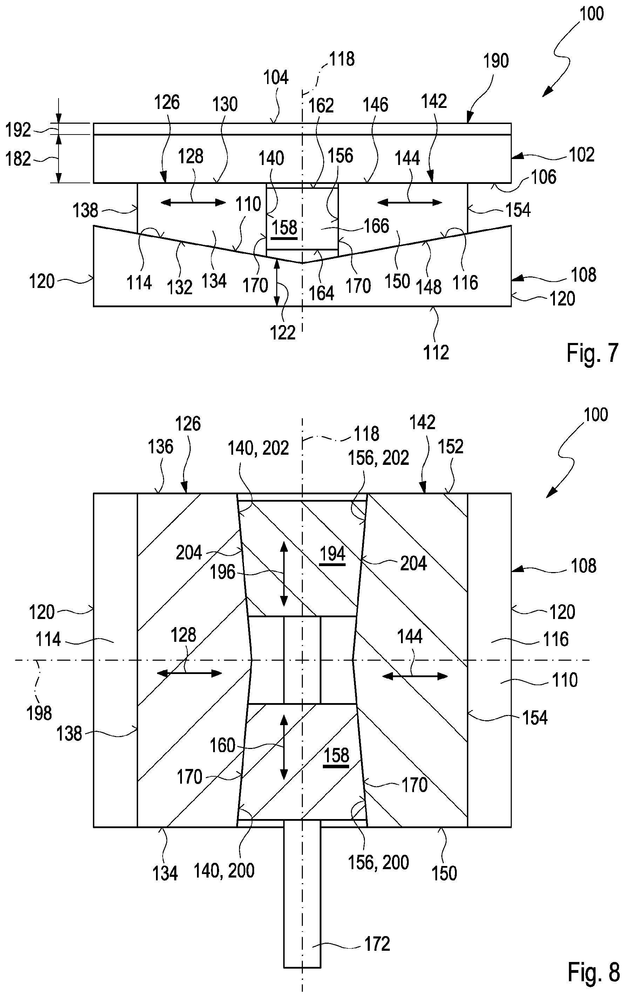

Figur 7 zeigt eine Vorderansicht einer Stellvorrichtung 100 gemäß einer vierten Ausführungsform. Nachstehend werden lediglich die Unterschiede zur Stellvorrichtung 100 der ersten Ausführungsform beschrieben und gleiche oder vergleichbare Bauteile und Merkmale sind mit gleichen Bezugszeichen versehen. Die Stellvorrichtung 100 der vierten Ausführungsform umfasst weiterhin ein Dämpfungselement 190. Das Dämpfungselement 190 ist auf der Oberseite 104 der Bodenplatte 102 angeordnet. Eine Dicke bzw. Höhe 192 des Dämpfungselement 190 kann nach Bedarf angepasst sein. Bei der gezeigten Ausführungsform ist die Höhe 192 des Dämpfungselements 190 kleiner als die Höhe 182 der Bodenplatte 102. Die Betriebsweise der Stellvorrichtung 100 der vierten Ausführungsform ist grundsätzlich identisch zur Betriebsweise der Stellvorrichtung 100 der ersten Ausführungsform.

Figur 8 zeigt eine Schnittansicht einer Stellvorrichtung 100 gemäß einer fünften Ausführungsform. Nachstehend werden lediglich die Unterschiede zur Stellvorrichtung 100 der ersten Ausführungsform beschrieben und gleiche oder vergleichbare Bauteile und Merkmale sind mit gleichen Bezugszeichen versehen. Die Stellvorrichtung 100 der fünften Ausführungsform umfasst weiterhin ein viertes Stellelement 194. Das vierte Stellelement 194 ist zwischen der Bodenplatte 102 und der Tragplatte 108 in einer vierten Richtung 196 parallel zu der Symmetrieebene 118 bewegbar. Die vierte Richtung 196 ist der dritten Richtung 160 entgegengesetzt. Das vierte Stellelement 194 ist zwischen dem ersten Stellelement 126 und dem zweiten Stellelement 142 angeordnet und berührt diese. Das vierte Stellelement 194 ist spiegelsymmetrisch zu dem dritten Stellelement 158 bezüglich einer Spiegelebene 198 senkrecht zu der Symmetrieebene 118 ausgebildet. Bezüglich der dritten Richtung 160 bzw. vierten Richtung 196 ist das dritte Stellelement 158 der fünften Ausführungsform kürzer als bei der ersten Ausführungsform. Das gilt entsprechend für das vierte Stellelement 194.

Die innenseitigen Außenflächen 140, 156 des ersten Stellelements 126 und des zweiten Stellelements 142 weisen jeweils eine erste schiefe Ebene 200 und eine zweite schiefe Ebene 202 auf, die spiegelsymmetrisch zueinander bezüglich der Spiegelebene 198 senkrecht zu der Symmetrieebene 118 ausgebildet sind. Diese schiefen Ebenen 200, 202 des ersten Stellelements 126 und zweiten Stellelements 142 sind komplementär zu den Außenflächen 170, des dritten Stellelements 158 und Außenflächen 204 des vierten Stellelements 194 zu der dritten Richtung 160 und vierten Richtung 196 geneigt. Das erste Stellelement 126 und das zweite Stellelement 142 sind gemeinsam in der ersten Richtung 128 und der zweiten Richtung 144 mittels des dritten Stellelements 158 und des vierten Stellelements 194 gemeinsam bewegbar. Mit anderen Worten bewirkt eine gemeinsame Bewegung des dritten Stellelements 158 und des vierten Stellelements 194 eine gemeinsame Bewegung des ersten Stellelements 126 und des zweiten Stellelements 142. Die Betriebsweise der Stellvorrichtung 100 der fünften Ausführungsform unterscheidet sich von der Betriebsweise der Stellvorrichtung 100 der ersten Ausführungsform darin, dass das dritte Stellelement 158 und das vierte Stellelement 194 gleichzeitig und gegenläufig mittels eines einzigen Verschiebeelements 172 bewegbar sind.

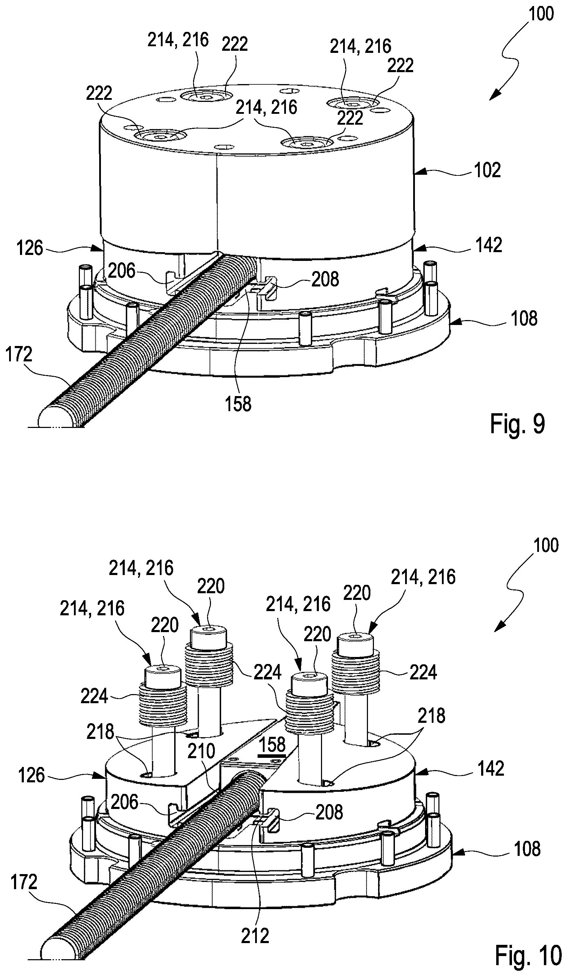

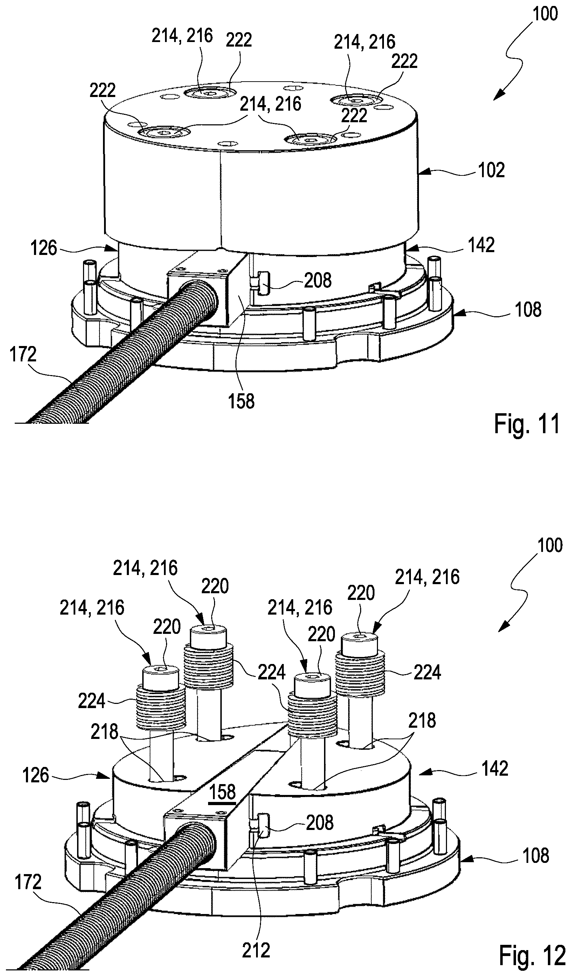

Figur 9 zeigt eine perspektivische Ansicht einer Stellvorrichtung 100 gemäß einer sechsten Ausführungsform in einer ersten Stellung. Figur 10 zeigt eine perspektivische Ansicht der Stellvorrichtung 100 gemäß der sechsten Ausführungsform in der ersten Stellung ohne Bodenplatte 102. Figur 11 zeigt eine perspektivische Ansicht der Stellvorrichtung 100 gemäß der sechsten Ausführungsform in einer zweiten Stellung. Figur 12 zeigt eine perspektivische Ansicht der Stellvorrichtung 100 gemäß der sechsten Ausführungsform in der zweiten Stellung ohne Bodenplatte 102. Nachstehend werden lediglich die Unterschiede zur Stellvorrichtung 100 der ersten Ausführungsform beschrieben und gleiche oder vergleichbare Bauteile und Merkmale sind mit gleichen Bezugszeichen versehen. Bei der Stellvorrichtung 100 der sechsten Ausführungsform weist das erste Stellelement 126 eine erste Führungsnut 206 auf und das zweite Stellelement 142 weist eine zweite Führungsnut 208 auf. Das dritte Stellelement 158 weist einen ersten Führungsvorsprung 210 und einen zweiten Führungsvorsprung 212 auf. Der erste Führungsvorsprung 210 greift in die erste Führungsnut 206 ein und der zweite Führungsvorsprung 212 greift in die zweite Führungsnut 208 ein. Es versteht sich, dass alternativ auch eine umgekehrte Ausbildung möglich ist, bei der das dritte Stellelement 158 eine erste Führungsnut 206 und eine zweite Führungsnut 208 aufweist, das erste Stellelement 126 einen ersten Führungsvorsprung 210 aufweist und das zweite Stellelement 142 einen zweiten Führungsvorsprung 212 aufweist. Auch bei dieser alternativen Ausgestaltung greift der erste Führungsvorsprung 210 in die erste Führungsnut 206 ein und der zweite Führungsvorsprung 212 greift in die zweite Führungsnut 208 ein.

Wie weiterhin in den Figuren 9 bis 12 gezeigt, sind die Bodenplatte 102 und die Tragplatte 108 mittels Führungselementen 214 miteinander verbunden. Die Führungselemente 214 sind als Führungsschrauben 216 ausgebildet. Alternativ können die Führungselemente 214 als Führungsstangen ausgebildet sein. Das erste Stellelement 126 und das zweite Stellelement 142 weisen jeweils Führungslöcher 218 auf. Die Führungselemente 214 erstrecken sich durch die Führungslöcher 218. Dabei befinden sich Schraubenköpfe 220 der Führungsschrauben 216 in Vertiefungen 222 in der Bodenplatte 102. Um eine seitliche Bewegung des ersten Stellelements 126 und des zweiten Stellelements 142 in der ersten Richtung 128 bzw. zweiten Richtung 144 zu ermöglichen, weisen die Führungslöcher 218 einen größeren Durchmesser als ein Außendurchmesser der Führungselemente 214 auf. Die Stellvorrichtung 100 weist weiterhin Federelemente 224 auf. Die Federelemente 224 sind mit den Führungselementen 214 derart verbunden, dass die Bodenplatte 102 und die Tragplatte 108 zueinander vorgespannt sind. Beispielsweise stützen sich die Federelemente 224 an den Schraubenköpfen 220 der Führungsschrauben 216 ab. Die Federelemente 224 sind beispielsweise Tellerfedern. Lediglich beispielhaft sind bei der vorliegenden Ausführungsform vier Führungselemente 214 vorgesehen, die in einem regelmäßigen, insbesondere quadratischen, Muster in einer Draufsicht gesehen angeordnet sind.

Weiterhin weisen die Bodenplatte 102 und die Tragplatte 108 jeweils einen kreisförmigen Querschnitt auf. So sind die Bodenplatte 102 und die Tragplatte 108 jeweils als Kreiszylinder ausgebildet, dessen Höhe geringer als sein Durchmesser ist. Um eine insgesamt zylindrische Form der Stellvorrichtung 100 zu bilden, sind die außenseitigen Außenflächen des ersten Stellelements 126 und des zweiten Stellelements 142 konvex gekrümmt bzw. im Wesentlichen halbkreisförmig ausgebildet.

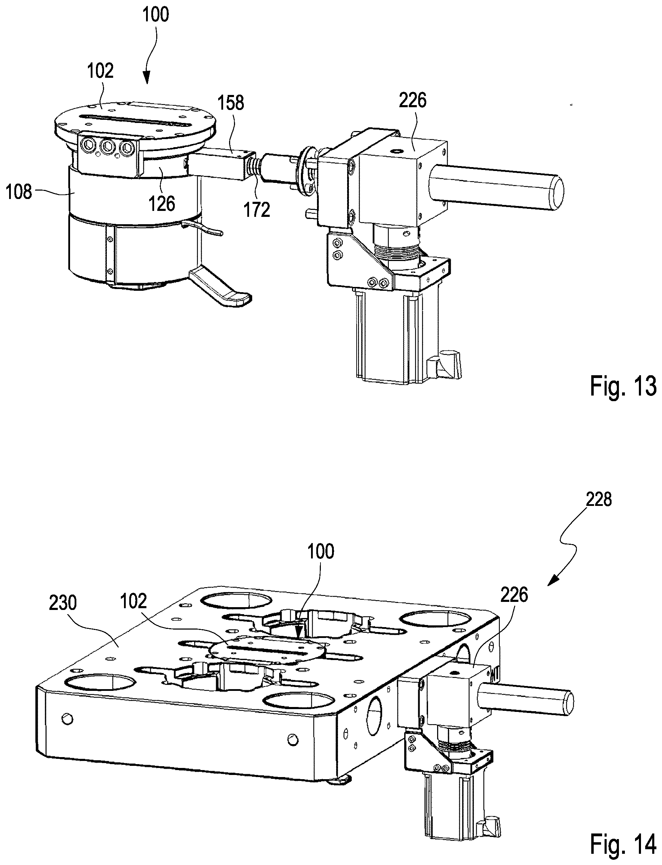

Figur 13 zeigt eine perspektivische Ansicht der Stellvorrichtung 100 gemäß der sechsten Ausführungsform und einer Antriebsvorrichtung 226. Die Antriebsvorrichtung 226 ist zum Bewegen des Verschiebeelements 172 und somit des dritten Stellelements 158 ausgebildet. Die Antriebsvorrichtung 226 ist beispielsweise ein Motor, der seitlich neben der Stellvorrichtung 100 angeordnet ist. Eine Ausgangswelle des Motors ist dabei mit dem Verschiebeelement 172 gekoppelt bzw. verbunden. Durch Antreiben der Ausgangswelle des Motors ist das Verschiebeelement 172 bewegbar, welches wiederum das dritte Stellelement 158 linear in der dritten Richtung bewegt.

Figur 14 zeigt eine perspektivische Ansicht eines Umformwerkzeugs 228. Das Umformwerkzeug 228 weist einen Rahmen 230 auf. In dem Rahmen 230 kann mindestens eine Stellvorrichtung 100 angeordnet werden. Lediglich beispielhaft können in dem gezeigten Rahmen 230 drei Stellvorrichtung 100en angeordnet werden. Die Stellvorrichtungen 100 sind im eingebauten Zustand nebeneinander in dem Rahmen 230 angeordnet. Aus Übersichtlichkeitsgründen ist lediglich eine Stellvorrichtung 100 dargestellt, die sich in der Mitte befindet. Jede Stellvorrichtung 100 weist eine eigene Antriebsvorrichtung 228 auf.

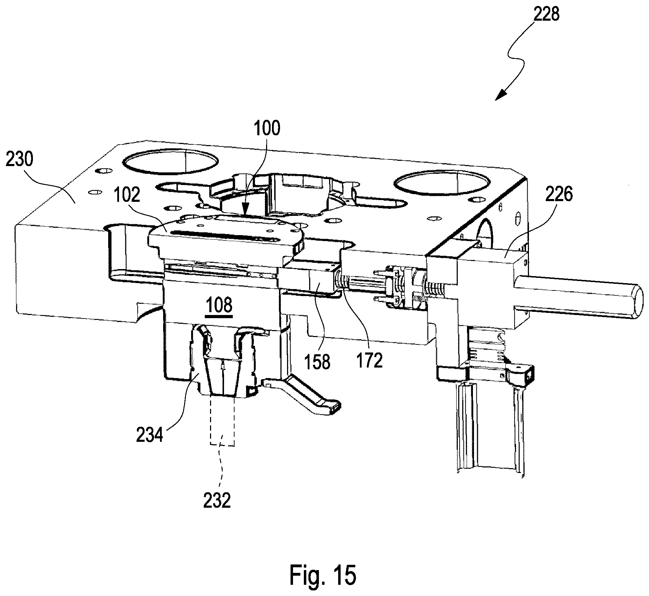

Figur 15 zeigt eine Schnittansicht des Umformwerkzeugs 228. Die Tragplatte 108 ist zum Verbinden mit einem Stempel 232 des Umformwerkzeugs 228 ausgebildet. Figur 15 zeigt das Umformwerkzeug 228 mit einem Stempel 232, der mit der Tragplatte 108 verbunden ist. Aus Gründen der Übersichtlichkeit ist der Stempel 232 nur mit einer gestrichelten Linie angedeutet. Wie gezeigt kann der Stempel 232 in einer Aufnahme 234 für den Stempel 232 angeordnet sein. Die Aufnahme 234 ist wiederum mit der Stellvorrichtung 100 verbunden. Der Stempel 232 ist mit der Unterseite 112 der Tragplatte 108 verbunden. Der Verfahrweg des Stempels 232 in ein umzuformendes Werkstück (nicht näher dargestellt) ist mittels der Stellvorrichtung 100 einstellbar, in dem der Abstand zwischen der Bodenplatte 102 und der Tragplatte 108 mittels der Stellelemente variiert wird.

### Bezugszeichenliste

- 100: Stellvorrichtung
- 102: Bodenplatte
- 104: Oberseite Bodenplatte
- 106: Unterseite Bodenplatte
- 108: Tragplatte
- 110: Oberseite Tragplatte
- 112: Unterseite Tragplatte
- 114: erste schiefe Ebene Tragplatte
- 116: zweite schiefe Ebene Tragplatte
- 118: Symmetrieebene
- 120: Seitenfläche Tragplatte
- 122: Höhe Tragplatte
- 124: Ebene
- 126: erstes Stellelement
- 128: erste Richtung
- 130: Oberseite erstes Stellelement
- 132: Unterseite erstes Stellelement
- 134: Vorderseite erstes Stellelement
- 136: Rückseite erstes Stellelement
- 138: außenseitige Außenfläche erstes Stellelement
- 140: innenseitige Außenfläche erstes Stellelement
- 142: zweites Stellelement
- 144: zweite Richtung
- 146: Oberseite zweites Stellelement
- 148: Unterseite zweites Stellelement
- 150: Vorderseite zweites Stellelement
- 152: Rückseite zweites Stellelement
- 154: außenseitige Außenfläche zweites Stellelement
- 156: innenseitige Außenfläche zweites Stellelement
- 158: drittes Stellelement
- 160: dritte Richtung
- 162: Oberseite drittes Stellelement
- 164: Unterseite drittes Stellelement
- 166: Vorderseite drittes Stellelement
- 168: Rückseite drittes Stellelement
- 170: Außenfläche drittes Stellelement
- 172: Verschiebelement
- 174: erste Höhe
- 176: zweite Höhe
- 178: erste schiefe Ebene Bodenplatte
- 180: zweite schiefe Ebene Bodenplatte
- 182: Höhe Bodenplatte
- 184: Ebene
- 186: erste schiefe Ebene drittes Stellelement
- 188: zweite schiefe Ebene drittes Stellelement
- 190: Dämpfungselement
- 192: Höhe Dämpfungselement
- 194: viertes Stellelement
- 196: vierte Richtung
- 198: Spiegelebene
- 200: erste schiefe Ebene Außenfläche erstes und zweites Stellelement
- 202: zweite schiefe Ebene Außenfläche erstes und zweites Stellelement
- 204: Außenfläche viertes Stellelement
- 206: erste Führungsnut
- 208: zweite Führungsnut
- 210: erster Führungsvorsprung
- 212: zweiter Führungsvorsprung
- 214: Führungselement
- 216: Führungsschraube
- 218: Führungsloch
- 220: Schraubenkopf
- 222: Vertiefung
- 224: Federelement
- 226: Antriebsvorrichtung
- 228: Umformwerkzeug
- 230: Rahmen
- 232: Stempel
- 234: Aufnahme
- α: Neigungswinkel
- β: Neigungswinkel
- γ: Neigungswinkel

## Patentansprüche

1. Stellvorrichtung (100), umfassend
eine Bodenplatte (102),
eine Tragplatte (108), wobei die Tragplatte (108) relativ zu der Bodenplatte (102) bewegbar ist, wobei die Tragplatte (108) auf einer der Bodenplatte (102) zugewandten Oberseite (110) eine erste schiefe Ebene (114) und eine zweite schiefe Ebene (116) aufweist, wobei die erste schiefe Ebene (114) und die zweite schiefe Ebene (116) zueinander spiegelsymmetrisch zu einer Symmetrieebene (118) angeordnet sind,
ein erstes Stellelement (126), wobei das erste Stellelement (126) in einer ersten Richtung (128) auf der ersten schiefen Ebene (114) bewegbar angeordnet ist, wobei das erste Stellelement (126) die Bodenplatte (102) berührt,
ein zweites Stellelement (142), wobei das zweite Stellelement (142) in einer zweiten Richtung (144) auf der zweiten schiefen Ebene (116) bewegbar angeordnet ist, wobei die zweite Richtung (144) der ersten Richtung (128) entgegengesetzt ist, wobei das zweite Stellelement (142) die Bodenplatte (102) berührt, und
mindestens ein drittes Stellelement (158), wobei das dritte Stellelement (158) zwischen der Bodenplatte (102) und der Tragplatte (108) in einer dritten Richtung (160) parallel zu der Symmetrieebene (118) bewegbar ist, wobei das dritte Stellelement (158) zwischen dem ersten Stellelement (126) und dem zweiten Stellelement (142) angeordnet ist und diese berührt, wobei mittels des dritten Stellelements (158) das erste Stellelement (126) und das zweite Stellelement (142) gemeinsam in der ersten Richtung (128) und der zweiten Richtung (144) bewegbar sind, wobei die erste Richtung (128) und die zweite Richtung (144) spiegelsymmetrisch zu der Symmetrieebene (118) sind, **dadurch gekennzeichnet , dass** die dritte Richtung (160) parallel zu einer der Tragplatte (108) abgewandten Oberseite (104) der Bodenplatte (102) ist.

2. Stellvorrichtung (100) nach dem vorhergehenden Anspruch, wobei die erste Richtung (128) und die zweite Richtung (144) senkrecht zu der dritten Richtung (160) sind.

3. Stellvorrichtung (100) nach einem der vorhergehenden Ansprüche, wobei die erste schiefe Ebene (114) und die zweite schiefe Ebene (116) so spiegelsymmetrisch zu der Symmetrieebene (118) zueinander angeordnet sind, dass eine Höhe (122) der Tragplatte (108) mit zunehmenden Abstand senkrecht zu der Symmetrieebene (118) zunimmt.

4. Stellvorrichtung (100) nach einem der vorhergehenden Ansprüche, wobei das erste Stellelement (126), das zweite Stellelement (142) und/oder das dritte Stellelement (158) im Wesentlichen keilförmig ausgebildet sind.

5. Stellvorrichtung (100) nach einem der vorhergehenden Ansprüche, wobei das dritte Stellelement (158) zwei gegenüberliegende Außenflächen (170) aufweist, wobei die Außenflächen (170) des dritten Stellelements (158) zueinander spiegelsymmetrisch zu der Symmetrieebene (118) und bezüglich der dritten Richtung (160) geneigt angeordnet sind, wobei das erste Stellelement (126) und das zweite Stellelement (142) jeweils eine Außenfläche (140, 156) aufweisen, wobei die Außenflächen (140, 156) des ersten Stellelements (126) und des zweiten Stellelements (142) komplementär zu den Außenflächen (170) des dritten Stellelements (158) zu der dritten Richtung (160) geneigt sind, wobei das dritte Stellelement (158), das erste Stellelement (126) und das zweite Stellelement (142) an den Außenflächen (140, 156, 170) einander berühren.

6. Stellvorrichtung (100) nach einem der vorhergehenden Ansprüche, wobei die Tragplatte (108) durch eine Bewegung des ersten Stellelements (126) und des zweiten Stellelements (142) im Wesentlichen parallel zu der Symmetrieebene (118) und senkrecht zu der dritten Richtung (160) relativ zu der Bodenplatte (102) bewegbar ist.

7. Stellvorrichtung (100) nach einem der vorhergehenden Ansprüche, wobei das erste Stellelement (126) eine Unterseite (132) aufweist, die komplementär zu der ersten schiefen Ebene (114) der Tragplatte (108) geneigt ist, wobei das zweite Stellelement (142) eine Unterseite (148) aufweist, die komplementär zu der zweiten schiefen Ebene (116) der Tragplatte (108) geneigt ist.

8. Stellvorrichtung (100) nach einem der Ansprüche 1 bis 7, wobei die Bodenplatte (102) eine Unterseite (106) mit einer ersten schiefen Ebene (178) und einer zweiten schiefen Ebene (180) aufweist, wobei die erste schiefe Ebene (178) und die zweite schiefe Ebene (180) der Bodenplatte (102) zueinander spiegelsymmetrisch zu der Symmetrieebene (118) angeordnet sind.

9. Stellvorrichtung (100) nach dem vorhergehenden Anspruch, wobei das erste Stellelement (126) eine Oberseite (130) aufweist, die komplementär zu der ersten schiefen Ebene (178) der Bodenplatte (102) geneigt ist, wobei das zweite Stellelement (142) eine Oberseite (146) aufweist, die komplementär zu der zweiten schiefen Ebene (180) der Bodenplatte (102) geneigt ist.

10. Stellvorrichtung (100) nach einem der vorhergehenden Ansprüche, weiterhin umfassend ein Verschiebeelement (172), wobei das Verschiebeelement (172) mit dem dritten Stellelement (158) verbunden ist, wobei das Verschiebeelement (172) zum Bewegen des dritten Stellelements (158) ausgebildet ist, wobei das Verschiebeelement (172) insbesondere manuell, hydraulisch, pneumatisch und/oder motorisch bewegbar ist.

11. Stellvorrichtung (100) nach einem der vorhergehenden Ansprüche, wobei das erste Stellelement (126) eine erste Führungsnut (206) aufweist und das zweite Stellelement (142) eine zweite Führungsnut (208) aufweist, wobei das dritte Stellelement (158) einen ersten Führungsvorsprung (210) und einen zweiten Führungsvorsprung (212) aufweist, oder
wobei das dritte Stellelement (158) eine erste Führungsnut (206) und eine zweite Führungsnut (208) aufweist, wobei das erste Stellelement (126) einen ersten Führungsvorsprung (210) aufweist und einen das zweite Stellelement (142) einen zweiten Führungsvorsprung (212) aufweist,
wobei der erste Führungsvorsprung (210) in die erste Führungsnut (206) eingreift und der zweite Führungsvorsprung (212) in die zweite Führungsnut (208) eingreift.

12. Stellvorrichtung (100) nach einem der vorhergehenden Ansprüche, weiterhin umfassend ein viertes Stellelement (194), wobei das vierte Stellelement (194) zwischen der Bodenplatte (102) und der Tragplatte (108) in einer vierten Richtung (196) parallel zu der Symmetrieebene (118) bewegbar ist, wobei das vierte Stellelement (194) zwischen dem ersten Stellelement (126) und dem zweiten Stellelement (142) angeordnet ist und diese berührt, wobei die vierte Richtung (196) der dritten Richtung (160) entgegengesetzt ist, wobei gemeinsam mittels des dritten Stellelements (158) und des vierten Stellelements (194) das erste Stellelement (126) und das zweite Stellelement (142) gemeinsam in der ersten Richtung (128) und der zweiten Richtung (144) bewegbar sind.

13. Stellvorrichtung (100) nach einem der vorhergehenden Ansprüche, wobei die Tragplatte (108) zum Verbinden mit einem Stempel (232) eines Umformwerkzeugs (228) ausgebildet ist.

14. Umformwerkzeug (228) mit mindestens einem Stempel (232) und einer Stellvorrichtung (100) nach einem der vorhergehenden Ansprüche, wobei der Stempel (232) mit der Tragplatte (108) verbunden ist.

## Claims

1. Actuating device (100), comprising
a base plate (102),
a support plate (108), wherein the support plate (108) is movable relative to the base plate (102), wherein the support plate (108) has a first oblique plane (114) and a second oblique plane (116) on an upper side (110) facing the base plate (102), wherein the first oblique plane (114) and the second oblique plane (116) are arranged mirror-symmetrically to one another with respect to a plane of symmetry (118),
a first actuating element (126), wherein the first actuating element (126) is arranged so as to be movable in a first direction (128) on the first oblique plane (114), wherein the first actuating element (126) touches the base plate (102),
a second actuating element (142), wherein the second actuating element (142) is arranged so as to be movable in a second direction (144) on the second oblique plane (116), wherein the second direction (144) is contrary to the first direction (128), wherein the second actuating element (142) touches the base plate (102), and
at least one third actuating element (158), wherein the third actuating element (158) is movable between the base plate (102) and the support plate (108) in a third direction (160) parallel to the plane of symmetry (118), wherein the third actuating element (158) is arranged between the first actuating element (126) and the second actuating element (142) and touches these actuating elements, wherein the first actuating element (126) and the second actuating element (142) are jointly movable in the first direction (128) and the second direction (144) by means of the third actuating element (158), wherein the first direction (128) and the second direction (144) are mirror-symmetrical with respect to the plane of symmetry (118), **characterized in that** the third direction (160)
is parallel to an upper side (104) of the base plate (102), which upper side faces away from the support plate (108).

2. Actuating device (100) according to the preceding claim, wherein the first direction (128) and the second direction (144) are perpendicular to the third direction (160).

3. Actuating device (100) according to one of the preceding claims, wherein the first oblique plane (114) and the second oblique plane (116) are arranged mirror-symmetrically to one another with respect to the plane of symmetry (118) in such a way that a height (122) of the support plate (108) increases as the distance perpendicularly from the plane of symmetry (118) increases.

4. Actuating device (100) according to one of the preceding claims, wherein the first actuating element (126), the second actuating element (142) and/or the third actuating element (158) are of substantially wedge-shaped design.

5. Actuating device (100) according to one of the preceding claims, wherein the third actuating element (158) has two opposite outer surfaces (170), wherein the outer surfaces (170) of the third actuating element (158) are arranged mirror-symmetrically to one another with respect to the plane of symmetry (118) and inclined with respect to the third direction (160), wherein the first actuating element (126) and the second actuating element (142) each have an outer surface (140, 156), wherein the outer surfaces (140, 156) of the first actuating element (126) and the second actuating element (142) are inclined in the third direction (160) in a manner complementary to the outer surfaces (170) of the third actuating element (158), wherein the third actuating element (158), the first actuating element (126) and the second actuating element (142) touch one another at the outer surfaces (140, 156, 170).

6. Actuating device (100) according to one of the preceding claims, wherein the support plate (108) is movable relative to the base plate (102) by a movement of the first actuating element (126) and the second actuating element (142) substantially parallel to the plane of symmetry (118) and perpendicular to the third direction (160).

7. Actuating device (100) according to one of the preceding claims, wherein the first actuating element (126) has an underside (132) which is inclined in a manner complementary to the first oblique plane (114) of the support plate (108), wherein the second actuating element (142) has an underside (148)which is inclined in a manner complementary to the second oblique plane (116) of the support plate (108).

8. Actuating device (100) according to one of Claims 1 to 7, wherein the base plate (102) has an underside (106) with a first oblique plane (178) and a second oblique plane (180), wherein the first oblique plane (178) and the second oblique plane (180) of the base plate (102) are arranged mirror-symmetrically to one another with respect to the plane of symmetry (118).

9. Actuating device (100) according to the preceding claim, wherein the first actuating element (126) has an upper side (130) which is inclined in a manner complementary to the first oblique plane (178) of the base plate (102), wherein the second actuating element (142) has an upper side (146) which is inclined in a manner complementary to the second oblique plane (180) of the base plate (102).

10. Actuating device (100) according to one of the preceding claims, furthermore comprising a displacement element (172), wherein the displacement element (172) is connected to the third actuating element (158), wherein the displacement element (172) is designed to move the third actuating element (158), wherein the displacement element (172) is movable in particular manually, hydraulically, pneumatically and/or by a motor.

11. Actuating device (100) according to one of the preceding claims, wherein the first actuating element (126) has a first guide groove (206) and the second actuating element (142) has a second guide groove (208), wherein the third actuating element (158) has a first guide projection (210) and a second guide projection (212), or
wherein the third actuating element (158) has a first guide groove (206) and a second guide groove (208), wherein the first actuating element (126) has a first guide projection (210) and the second actuating element (142) has a second guide projection (212),
wherein the first guide projection (210) engages in the first guide groove (206) and the second guide projection (212) engages in the second guide groove (208).

12. Actuating device (100) according to one of the preceding claims, furthermore comprising a fourth actuating element (194), wherein the fourth actuating element (194) is movable between the base plate (102) and the support plate (108) in a fourth direction (196) parallel to the plane of symmetry (118), wherein the fourth actuating element (194) is arranged between the first actuating element (126) and the second actuating element (142) and touches the these actuating elements, wherein the fourth direction (196) is contrary to the third direction (160), wherein the first actuating element (126) and the second actuating element (142) are jointly movable in the first direction (128) and the second direction (144) by means of the third actuating element (158) and the fourth actuating element (194).

13. Actuating device (100) according to one of the preceding claims, wherein the support plate (108) is designed for connection to a punch (232) of a forming tool (228).

14. A forming tool (228) having at least one punch (232) and an actuating device (100) according to one of the preceding claims, wherein the punch (232) is connected to the support plate (108).

## Revendications

1. Dispositif de réglage (100), comprenant une plaque de base (102),
une plaque de support (108), la plaque de support (108) pouvant être déplacée par rapport à la plaque de base (102), la plaque de support (108) comportant sur un côté supérieur (110) tourné vers la plaque de base (102) un premier plan incliné (114) et un deuxième plan incliné (116), le premier plan incliné (114) et le deuxième plan incliné (116) étant disposés symétriquement en miroir par rapport à un plan de symétrie (118) l'un par rapport à l'autre,
un premier élément de réglage (126), le premier élément de réglage (126) étant disposé de manière à pouvoir être déplacé dans une première direction (128) sur le premier plan incliné (114), le premier élément de réglage (126) entrant en contact avec la plaque de base (102),
un deuxième élément de réglage (142), le deuxième élément de réglage (142) étant disposé de manière à pouvoir être déplacé dans une deuxième direction (144) sur le deuxième plan incliné (116), la deuxième direction (144) étant opposée à la première direction (128), le deuxième élément de réglage (142) entrant en contact avec la plaque de base (102), et
au moins un troisième élément de réglage (158), le troisième élément de réglage (158) pouvant être déplacé entre la plaque de base (102) et la plaque de support (108) dans une troisième direction (160) parallèlement au plan de symétrie (118), le troisième élément de réglage (158) étant disposé entre le premier élément de réglage (126) et le deuxième élément de réglage (142) et entrant en contact avec ceux-ci, le premier élément de réglage (126) et le deuxième élément de réglage (142) pouvant être déplacés ensemble dans la première direction (128) et la deuxième direction (144) au moyen du troisième élément de réglage (158), la première direction (128) et la deuxième direction (144) étant symétriques en miroir par rapport au plan de symétrie (118), **caractérisé en ce que** la troisième direction (160) est parallèle à un côté supérieur (104), opposé à la plaque de support (108), de la plaque de base (102).

2. Dispositif de réglage (100) selon la revendication précédente, la première direction (128) et la deuxième direction (144) étant perpendiculaires à la troisième direction (160).

3. Dispositif de réglage (100) selon l'une des revendications précédentes, le premier plan incliné (114) et le deuxième plan incliné (116) étant disposés en symétrie en miroir par rapport au plan de symétrie (118) l'un par rapport à l'autre de telle sorte qu'une hauteur (122) de la plaque de support (108) augmente au fur et à mesure que la distance augmente perpendiculairement au plan de symétrie (118).

4. Dispositif de réglage (100) selon l'une des revendications précédentes, le premier élément de réglage (126), le deuxième élément de réglage (142) et/ou le troisième élément de réglage (158) étant sensiblement en forme de coin.

5. Dispositif de réglage (100) selon l'une des revendications précédentes, le troisième élément de réglage (158) comportant deux surfaces extérieures opposées (170), les surfaces extérieures (170) du troisième élément de réglage (158) étant disposées de manière inclinée en symétrie en miroir l'une par rapport à l'autre par rapport au plan de symétrie (118) et par rapport à la troisième direction (160), le premier élément de réglage (126) et le deuxième élément de réglage (142) comportant chacun une surface extérieure (140, 156), les surfaces extérieures (140, 156) du premier élément de réglage (126) et du deuxième élément de réglage (142) étant inclinés de manière complémentaire aux surfaces extérieures (170) du troisième élément de réglage (158) par rapport à la troisième direction (160), le troisième élément de réglage (158), le premier élément de réglage (126) et le deuxième élément de réglage (142) entrant en contact les uns avec les autres sur les surfaces extérieures (140, 156, 170).

6. Dispositif de réglage (100) selon l'une des revendications précédentes, la plaque de support (108) pouvant être déplacée par un déplacement du premier élément de réglage (126) et du deuxième élément de réglage (142) sensiblement parallèlement au plan de symétrie (118) et perpendiculairement à la troisième direction (160) par rapport à la plaque de base (102).

7. Dispositif de réglage (100) selon l'une des revendications précédentes, le premier élément de réglage (126) comportant un côté inférieur (132), qui est incliné de manière complémentaire au premier plan incliné (114) de la plaque de support (108), le deuxième élément de réglage (142) comportant un côté inférieur (148), qui est incliné de manière complémentaire du deuxième plan incliné (116) de la plaque de support (108).

8. Dispositif de réglage (100) selon l'une des revendications 1 à 7, la plaque de base (102) comportant un côté inférieur (106) avec un premier plan incliné (178) et un deuxième plan incliné (180), le premier plan incliné (178) et le deuxième plan incliné (180) de la plaque de base (102) étant disposés en symétrie en miroir l'un par rapport à l'autre par rapport au plan de symétrie (118).

9. Dispositif de réglage (100) selon la revendication précédente, le premier élément de réglage (126) comportant un côté supérieur (130), qui est incliné de manière complémentaire au premier plan incliné (178) de la plaque de base (102), le deuxième élément de réglage (142) comportant un côté supérieur (146), qui est incliné de manière complémentaire au deuxième plan incliné (180) de la plaque de base (102).

10. Dispositif de réglage (100) selon l'une des revendications précédentes, comprenant par ailleurs un élément coulissant (172), l'élément coulissant (172) étant relié au troisième élément de réglage (158), l'élément coulissant (172) étant formé pour déplacer le troisième élément de réglage (158), l'élément coulissant (172) pouvant être déplacé en particulier manuellement, hydrauliquement, pneumatiquement et/ou par moteur.

11. Dispositif de réglage (100) selon l'une des revendications précédentes, le premier élément de réglage (126) comportant une première rainure de guidage (206) et le deuxième élément de réglage (142) comportant une deuxième rainure de guidage (208), le troisième élément de réglage (158) comportant une première partie faisant saillie de guidage (210) et une deuxième partie faisant saillie de guidage (212), ou
le troisième élément de réglage (158) comportant une première rainure de guidage (206) et une deuxième rainure de guidage (208), le premier élément de réglage (126) comportant une première partie faisant saillie de guidage (210) et le deuxième élément de réglage (142) comportant une deuxième partie faisant saillie de guidage (212),
la première partie faisant saillie de guidage (210) venant en prise avec la première rainure de guidage (206) et la deuxième partie faisant saillie de guidage (212) venant en prise avec la deuxième rainure de guidage (208).

12. Dispositif de réglage (100) selon l'une des revendications précédentes, comprenant par ailleurs un quatrième élément de réglage (194), le quatrième élément de réglage (194) pouvant être déplacé parallèlement au plan de symétrie (118) entre la plaque de base (102) et la plaque de support (108) dans une quatrième direction (196), le quatrième élément de réglage (194) étant disposé entre le premier élément de réglage (126) et le deuxième élément de réglage (142) et entrant en contact avec ceux-ci, la quatrième direction (196) étant opposée à la troisième direction (160), le premier élément de réglage (126) et le deuxième élément de réglage (142) pouvant être déplacés ensemble dans la première direction (128) et la deuxième direction (144) ensemble au moyen du troisième élément de réglage (158) et du quatrième élément de réglage (194).

13. Dispositif de réglage (100) selon l'une des revendications précédentes, la plaque de support (108) étant formée pour être reliée à un poinçon (232) d'un outil de façonnage (228).

14. Outil de façonnage (228) avec au moins un poinçon (232) et un dispositif de réglage (100) selon l'une des revendications précédentes, le poinçon (232) étant relié à la plaque de support (108).
